# EUROPEAN PATENT APPLICATION

(11) **EP 4 401 061 A1**
(43) Date of publication of application: **17.07.2024**
(21) Application number: 21957882.0
(22) Date of filing: 24.09.2021
(51) Int. Cl.: G08G 1/14, B60W 30/06

(54) **AUTOMATED VALET PARKING METHOD AND APPARATUS**

(71) Applicant: Huawei Technologies Co., Ltd., Shenzhen, Guangdong 518129 (CN)
(72) Inventor: SHI, Chang, Shenzhen, Guangdong 518129 (CN); HU, Wenxiao, Shenzhen, Guangdong 518129 (CN); LI, Qiang, Shenzhen, Guangdong 518129 (CN)
(74) Representative: Maiwald GmbH
(86) International application number: PCT/CN2021/120299
(87) International publication number: WO 2023/044749

(57) **Abstract**

This application relates to an automated valet parking method and apparatus. The method includes: displaying information about a parking space in a target area when it is detected that an ego vehicle has entered the target area; displaying a parking route, where the parking route includes a route from a location of the ego vehicle to a target parking space in the target area; and controlling the ego vehicle to perform automated valet parking based on the parking route. According to this application, flexibility and autonomy of parking for a user are improved, and user experience is improved. The ego vehicle can autonomously complete parking route planning, automated valet parking, and the like, so that a hardware requirement on a target area is reduced.

## Description

### TECHNICAL FIELD

This application relates to the field of intelligent driving technologies, and in particular, to an automated valet parking method and apparatus.

### BACKGROUND

Automated valet parking (Automated Valet Parking, AVP) is an autonomous driving technology in which a user can exit a vehicle after the vehicle arrives at a place (for example, a park, a residential area, or a shopping mall), and the vehicle can automatically find a parking space and park. This helps the user park the vehicle at the parking space and saves time for finding a parking space and parking.

In an existing implementation of AVP, a user needs to park a vehicle at a specific location in a parking lot that supports AVP, and then the user get off, and turns on a mobile phone to start AVP for parking. A parking space for parking is automatically assigned by a system. In this way, a parking lot needs to be equipped with a device, for example, a sensor, which incur high costs and limited application scenarios. In addition, the user cannot autonomously select a parking space for parking, and the user needs to park a vehicle at a specific location. This limits flexibility and autonomy of parking for the user, resulting in a lack of security and control during a parking process, and affecting user experience.

### SUMMARY

In view of this, an automated valet parking method and apparatus, a storage medium, and a computer program product are provided.

According to a first aspect, an embodiment of this application provides an automated valet parking method. The method includes: displaying information about a parking space in a target area when it is detected that an ego vehicle has entered the target area; displaying a parking route, where the parking route includes a route from a location of the ego vehicle to a target parking space in the target area; and controlling the ego vehicle to perform automated valet parking based on the parking route.

Based on the foregoing technical solution, when it is detected that the ego vehicle has entered the target area, the information about the parking space in the target area is automatically displayed, so that the user can autonomously select the target parking space. In addition, the user does not need to drive the ego vehicle to a specific location, and the user may not exit the vehicle, forming smooth transition from a current driving status of the ego vehicle. This improves flexibility and autonomy of parking for the user. The parking route is displayed, and the ego vehicle is controlled to perform automated valet parking based on the parking route. In this way, the ego vehicle can autonomously complete parking route planning, automated valet parking, and the like, so that a hardware requirement on the target area is reduced, and there is a wide application scope. In addition, the user may monitor a parking process. This improves security and control of the user, and improves user experience.

According to the first aspect, in a first possible implementation of the first aspect, the parking space in the target area includes a favorited parking space and/or a recommended parking space.

Based on the foregoing technical solution, the favorited parking space is a parking space that is favorited by the user based on a preference of the user, and the recommended parking space is a parking space selected based on a parking habit of the user. Compared with another parking space in the target area, the user is more likely to select the favorited parking space or the recommended parking space to be a parking space for parking this time. In this way, when it is detected that the ego vehicle has entered the target area, an automated valet parking system automatically displays information about the favorited parking space and/or information about the recommended parking space in the target area, so that the user can conveniently and quickly select a preferred parking space for parking, improving user experience.

According to the first aspect or the first possible implementation of the first aspect, in a second possible implementation of the first aspect, the displaying a parking route includes: displaying the parking route in response to an operation of a user for selecting the target parking space from the parking space in the target area.

Based on the foregoing technical solution, the parking route is displayed based on the parking space out of autonomous selection of the user for parking, so that the user can view the parking route conveniently.

According to the first aspect or the foregoing possible implementations of the first aspect, in a third possible implementation of the first aspect, the displaying information about a parking space in a target area includes: displaying a list of parking spaces in the target area, where the parking space in the list is sequentially sorted based on a corresponding priority.

Based on the foregoing technical solution, a parking space of a higher priority is more likely to be selected by the user to be the target parking space. The parking space of a higher priority is preferentially displayed in the list, so that the user can view the parking space more easily, improving efficiency of selecting the target parking space.

According to the first aspect or the foregoing possible implementations of the first aspect, in a fourth possible implementation of the first aspect, the displaying information about a parking space in a target area includes: displaying a distribution diagram of the parking space in the target area, where parking spaces corresponding to different priorities are represented by different icons.

Based on the foregoing technical solution, a parking space of a higher priority is more likely to be selected by the user to be the target parking space. The parking space of a higher priority may be represented by a more distinct icon in the distribution diagram, so that the user can view the parking space more easily, improving efficiency of selecting the target parking space. In addition, by using the distribution diagram, the user can view the information about the parking space more visually.

According to the foregoing possible implementations of the first aspect, in a fifth possible implementation of the first aspect, the favorited parking space includes at least one of a default parking space, an exclusive parking space, or a non-exclusive parking space, where priorities corresponding to the default parking space, the exclusive parking space, and the non-exclusive parking space decrease successively.

Based on the foregoing technical solution, the default parking space means that a possibility of being occupied is not high, and a user usually considers parking the ego vehicle in the default parking space. Therefore, a priority of the default parking space is set to a highest priority. The exclusive parking space means that the user usually considers parking in the exclusive parking space when a private parking space for the user is occupied or there is no private parking space for the user in the target area. Therefore, a priority of the exclusive parking space is set to a medium priority. The non-exclusive parking space means that there is a relatively high probability that the non-exclusive parking space is occupied by another vehicle because any vehicle that has entered the target area can park in the non-exclusive parking space. Therefore, a priority of the non-exclusive parking space is set to a lowest priority.

According to the foregoing possible implementations of the first aspect, in a sixth possible implementation of the first aspect, the method further includes: determining whether the target parking space is the favorited parking space when it is detected that the ego vehicle has been parked in the target parking space; and if the target parking space is a non-favorited parking space, sending prompt information about whether to favorite the target parking space to the user; or determining whether the target parking space is the favorited parking space in response to the operation of the user for selecting the target parking space from the parking space in the target area; and if the target parking space is a non-favorited parking space, sending prompt information about whether to favorite the target parking space to the user.

Based on the foregoing technical solution, a function of favoriting a parking space is provided for the user, improving user experience.

According to the sixth possible implementation of the first aspect, in a seventh possible implementation of the first aspect, the method further includes: displaying an editing page in response to an operation of the user for confirming to favorite the target parking space; and marking the target parking space as the favorited parking space in response to an operation of the user for editing a parking space type and/or a parking space name, where the parking space type includes any one of default, exclusive, and non-exclusive.

Based on the foregoing technical solution, when the user confirms to favorite the target parking space, the editing page is displayed, so that the user can edit information about the favorited parking space, for example, a name, whether the parking space is default, or whether the parking space is exclusive, so that the parking space can be favorited in an individualized manner.

According to the first aspect or the foregoing possible implementations of the first aspect, in an eighth possible implementation of the first aspect, the method further includes: obtaining location information of the ego vehicle; and detecting, based on the location information of the ego vehicle and location information of a boundary of the target area, whether the ego vehicle has entered the target area.

Based on the foregoing technical solution, whether the ego vehicle has entered the target area can be conveniently and quickly detected based on the location information of the ego vehicle and the location information of the boundary of the target area.

According to the first aspect or the foregoing possible implementations of the first aspect, in a ninth possible implementation of the first aspect, the ego vehicle is driven without navigation; or the ego vehicle is driven based on a navigation route, and a destination corresponding to the navigation route is a place that is in the target area and that is other than the parking space in the target area.

According to the first aspect or the foregoing possible implementations of the first aspect, in a tenth possible implementation of the first aspect, the controlling the ego vehicle to perform automated valet parking based on the parking route includes: in response to an automated valet parking command sent by the user, controlling the ego vehicle to perform automated valet parking based on the parking route.

Based on the foregoing technical solution, the user can autonomously make a decision on automated valet parking. This improves security and control of the user, and improves user experience.

According to the first aspect or the foregoing possible implementations of the first aspect, in an eleventh possible implementation of the first aspect, the method further includes: when it is detected that the target parking space is occupied, searching for a vacant parking space; and if the vacant parking space is found, automatically parking in the vacant parking space and sending location information of the vacant parking space to the user; and if the vacant parking space is not found, sending prompt information about taking over the vehicle to the user; or when it is detected that the target parking space is occupied, sending prompt information about taking over the vehicle to the user.

In an example, the target parking space may be the recommended parking space or the non-exclusive parking space. The recommended parking space or the non-exclusive parking space is usually a public parking space and is relatively highly possible to be occupied by another vehicle. Therefore, for the recommended parking space or the non-exclusive parking space, an area parking strategy may be used. To be specific, when the recommended parking space or the non-exclusive parking space is occupied, the ego vehicle automatically roves for parking and searches for a vacant parking space without a decision made by the user. This saves energy and time for the user and improves user experience. In another example, the target parking space may be the default parking space or the exclusive parking space. The default parking space and the exclusive parking space are usually private parking spaces for the user and are usually not occupied. For the default parking space or the exclusive parking space, a precise parking strategy may be used. To be specific, when the default parking space or the exclusive parking space is occupied, the prompt information about taking over the vehicle is sent to the user, and the user can autonomously make a decision. This improves autonomy of parking and a sense of being in command of the user and improves user experience.

According to the first aspect or the foregoing possible implementations of the first aspect, in a twelfth possible implementation of the first aspect, the method further includes: obtaining information about the vacant parking space in the target area; and determining an optimal vacant parking space in the vacant parking space when it is detected that the target parking space is occupied, and controlling the ego vehicle to park in the optimal vacant parking space.

In some examples, it may be determined, based on a parking habit of the user or the like, that a vacant parking space that satisfies the parking habit of the user is the optimal vacant parking space; and the ego vehicle is controlled to park in the optimal vacant parking space, improving user experience.

According to a second aspect, an embodiment of this application provides an automated valet parking method. The method includes: when it is detected that a navigation destination searched for by a user is in a target area, sending prompt information about whether to select a parking space to the user; displaying information about a parking space in the target area in response to an operation of the user for confirming to select a parking space; displaying a navigation route in response to an operation of the user for selecting a target parking space from the parking space in the target area, where the navigation route includes a route from a location of an ego vehicle to the target parking space; and when it is detected that the ego vehicle has entered the target area, controlling the ego vehicle to perform automated valet parking based on the navigation route.

Based on the foregoing technical solution, when it is detected that the navigation destination searched for by the user is in the target area, the prompt information about whether to select a parking space is sent to the user; the information about the parking space in the target area is displayed in response to the operation of the user for confirming to select a parking space, so that the user can autonomously select the target parking space; the navigation route is displayed in response to the operation of the user for selecting the target parking space from the parking space in the target area; and when it is detected that the ego vehicle has entered the target area, the user does not need to reselect the target parking space or plan a route again, and automated valet parking may be directly performed based on the navigation route. This is convenient and convenient, improves user experience, reduces a hardware requirement on the target area, and has a wide application scope. In addition, the user does not need to drive the ego vehicle to a specific location in the target area, and the user may not exit the vehicle, forming smooth transition from a current driving status of the ego vehicle to a parking process. This improves flexibility of parking for the user. In addition, the user may monitor the parking process. This improves security and control of the user, and improves user experience.

According to the second aspect, in a first possible implementation of the second aspect, the parking space in the target area includes a favorited parking space and/or a recommended parking space.

Based on the foregoing technical solution, because the favorited parking space is a parking space that is favorited by the user based on a preference of the user, and the recommended parking space is a parking space selected based on a parking habit of the user, compared with another parking space in the target area, the user is more likely to select the favorited parking space or the recommended parking space to be a parking space for parking this time. In this way, when it is detected that the ego vehicle has entered the target area, an automated valet parking system automatically displays information about the favorited parking space and/or information about the recommended parking space in the target area, so that the user can conveniently and quickly select a preferred parking space for parking, improving user experience.

According to the second aspect or the first possible implementation of the second aspect, in a second possible implementation of the second aspect, the displaying information about a parking space in the target area includes: displaying a distribution diagram of the parking space in the target area, where parking spaces corresponding to different priorities are represented by different icons.

Based on the foregoing technical solution, a parking space of a higher priority is more likely to be selected by the user to be the target parking space. The parking space of a higher priority may be represented by a more distinct icon in the distribution diagram, so that the user can view the parking space more easily, improving efficiency of selecting the target parking space. In addition, by using the distribution diagram, the user can view the information about the parking space more visually.

According to the second aspect or the foregoing possible implementations of the second aspect, in a third possible implementation of the second aspect, the displaying information about a parking space in the target area includes: displaying a list of parking spaces in the target area, where the parking space in the list is sequentially sorted based on a corresponding priority.

Based on the foregoing technical solution, a parking space of a higher priority is more likely to be selected by the user to be the target parking space. The parking space of a higher priority is preferentially displayed in the list, so that the user can view the parking space more easily, improving efficiency of selecting the target parking space.

According to the foregoing possible implementations of the second aspect, in a fourth possible implementation of the second aspect, the favorited parking space includes at least one of a default parking space, an exclusive parking space, or a non-exclusive parking space, where priorities corresponding to the default parking space, the exclusive parking space, and the non-exclusive parking space decrease successively.

Based on the foregoing technical solution, the default parking space means that a possibility of being occupied is not high, and a user usually considers parking the ego vehicle in the default parking space. Therefore, a priority of the default parking space is set to a highest priority. The exclusive parking space means that the user usually considers parking in the exclusive parking space when a private parking space for the user is occupied or there is no private parking space for the user in the target area. Therefore, a priority of the exclusive parking space is set to a medium priority. The non-exclusive parking space means that there is a relatively high probability that the non-exclusive parking space is occupied by another vehicle because any vehicle that has entered the target area can park in the non-exclusive parking space. Therefore, a priority of the non-exclusive parking space is set to a lowest priority.

According to the second aspect or the foregoing possible implementations of the second aspect, in a fifth possible implementation of the second aspect, the method further includes: determining whether the target parking space is the favorited parking space when it is detected that the ego vehicle has been parked in the target parking space; and if the target parking space is a non-favorited parking space, sending prompt information about whether to favorite the target parking space to the user; or determining whether the target parking space is the favorited parking space in response to the operation of the user for selecting the target parking space from the parking space in the target area; and if the target parking space is a non-favorited parking space, sending prompt information about whether to favorite the target parking space to the user.

Based on the foregoing technical solution, a function of favoriting a parking space is provided for the user, improving user experience.

According to the fifth possible implementation of the second aspect, in a sixth possible implementation of the second aspect, the method further includes: displaying an editing page in response to an operation of the user for confirming to favorite the target parking space; and marking the target parking space as the favorited parking space in response to an operation of the user for editing a parking space type and/or a parking space name, where the parking space type includes any one of default, exclusive, and non-exclusive.

Based on the foregoing technical solution, when the user confirms to favorite the target parking space, the editing page is displayed, so that the user can edit information about the favorited parking space, for example, a name, whether the parking space is default, or whether the parking space is exclusive, so that the parking space can be favorited in an individualized manner.

According to the foregoing possible implementations of the second aspect, in a seventh possible implementation of the second aspect, the method further includes: obtaining location information of the ego vehicle; and detecting, based on the location information of the ego vehicle and location information of a boundary of the target area, whether the ego vehicle has entered the target area.

Based on the foregoing technical solution, whether the ego vehicle has entered the target area can be conveniently and quickly detected based on the location information of the ego vehicle and the location information of the boundary of the target area.

According to the foregoing possible implementations of the second aspect, in an eighth possible implementation of the second aspect, the method further includes: when it is detected that the target parking space is occupied, searching for a vacant parking space; and if the vacant parking space is found, automatically parking in the vacant parking space and sending location information of the vacant parking space to the user; and if the vacant parking space is not found, sending prompt information about taking over the vehicle to the user; or when it is detected that the target parking space is occupied, sending prompt information about taking over the vehicle to the user.

In an example, the target parking space may be the recommended parking space or the non-exclusive parking space. The recommended parking space or the non-exclusive parking space is usually a public parking space and is relatively highly possible to be occupied by another vehicle. Therefore, for the recommended parking space or the non-exclusive parking space, an area parking strategy may be used. To be specific, when the recommended parking space or the non-exclusive parking space is occupied, the ego vehicle automatically roves for parking and searches for a vacant parking space without a decision made by the user. This saves energy and time for the user and improves user experience. In another example, the target parking space may be the default parking space or the exclusive parking space. The default parking space and the exclusive parking space are usually private parking spaces for the user and are usually not occupied. For the default parking space or the exclusive parking space, a precise parking strategy may be used. To be specific, when the default parking space or the exclusive parking space is occupied, the prompt information about taking over the vehicle is sent to the user, and the user can autonomously make a decision. This improves autonomy of parking and a sense of being in command of the user and improves user experience.

According to the foregoing possible implementations of the second aspect, in a ninth possible implementation of the second aspect, the method further includes: obtaining information about the vacant parking space in the target area; and determining an optimal vacant parking space in the vacant parking space when it is detected that the target parking space is occupied, and controlling the ego vehicle to park in the optimal vacant parking space.

In some examples, it may be determined, based on a parking habit of the user or the like, that a vacant parking space that satisfies the parking habit of the user is the optimal vacant parking space; and the ego vehicle is controlled to park in the optimal vacant parking space, improving user experience.

According to a third aspect, an embodiment of this application provides an automated valet parking apparatus. The apparatus includes: a first display module, configured to display information about a parking space in a target area when it is detected that an ego vehicle has entered the target area; a second display module, configured to display a parking route, where the parking route includes a route from a location of the ego vehicle to a target parking space in the target area; and a control module, configured to control the ego vehicle to perform automated valet parking based on the parking route.

According to the third aspect, in a first possible implementation of the third aspect, the parking space in the target area includes a favorited parking space and/or a recommended parking space.

According to the third aspect or the first possible implementation of the third aspect, in a second possible implementation of the third aspect, the second display module is further configured to: display the parking route in response to an operation of a user for selecting the target parking space from the parking space in the target area.

According to the third aspect or the foregoing possible implementations of the third aspect, in a third possible implementation of the third aspect, the first display module is further configured to displaying a list of parking spaces in the target area, where the parking space in the list is sequentially sorted based on a corresponding priority.

According to the third aspect or the foregoing possible implementations of the third aspect, in a fourth possible implementation of the third aspect, the first display module is further configured to display a distribution diagram of the parking space in the target area, where parking spaces corresponding to different priorities are represented by different icons.

According to the foregoing possible implementations of the third aspect, in a fifth possible implementation of the third aspect, the favorited parking space includes at least one of a default parking space, an exclusive parking space, or a non-exclusive parking space, where priorities corresponding to the default parking space, the exclusive parking space, and the non-exclusive parking space decrease successively.

According to the foregoing possible implementations of the third aspect, in a sixth possible implementation of the third aspect, the apparatus further includes: a prompting module, configured to: determine whether the target parking space is the favorited parking space when it is detected that the ego vehicle has been parked in the target parking space; and if the target parking space is a non-favorited parking space, send prompt information about whether to favorite the target parking space to the user; or determine whether the target parking space is the favorited parking space in response to the operation of the user for selecting the target parking space from the parking space in the target area; and if the target parking space is a non-favorited parking space, send prompt information about whether to favorite the target parking space to the user.

According to the sixth possible implementation of the third aspect, in a seventh possible implementation of the third aspect, the apparatus further includes: a favoriting module, configured to: display an editing page in response to an operation of the user for confirming to favorite the target parking space; and mark the target parking space as the favorited parking space in response to an operation of the user for editing a parking space type and/or a parking space name, where the parking space type includes any one of default, exclusive, and non-exclusive.

According to the third aspect or the foregoing possible implementations of the third aspect, in an eighth possible implementation of the third aspect, the apparatus further includes a detection module, configured to: obtain location information of the ego vehicle; and detect, based on the location information of the ego vehicle and location information of a boundary of the target area, whether the ego vehicle has entered the target area.

According to the third aspect or the foregoing possible implementations of the third aspect, in a ninth possible implementation of the third aspect, the ego vehicle is driven without navigation; or the ego vehicle is driven based on a navigation route, and a destination corresponding to the navigation route is a place that is in the target area and that is other than the parking space in the target area.

According to the third aspect or the foregoing possible implementations of the third aspect, in a tenth possible implementation of the third aspect, the control module is further configured to: in response to an automated valet parking command sent by the user, control the ego vehicle to perform automated valet parking based on the parking route.

According to the third aspect or the foregoing possible implementations of the third aspect, in an eleventh possible implementation of the third aspect, the control module is further configured to: when it is detected that the target parking space is occupied, search for a vacant parking space; and if the vacant parking space is found, automatically park in the vacant parking space and send location information of the vacant parking space to the user; and if the vacant parking space is not found, send prompt information about taking over the vehicle to the user; or when it is detected that the target parking space is occupied, send prompt information about taking over the vehicle to the user.

According to the third aspect or the foregoing possible implementations of the third aspect, in a twelfth possible implementation of the third aspect, the control module is further configured to: obtain information about the vacant parking space in the target area; and determine an optimal vacant parking space in the vacant parking space when it is detected that the target parking space is occupied, and control the ego vehicle to park in the optimal vacant parking space.

According to a fourth aspect, an embodiment of this application provides an automated valet parking apparatus. The apparatus includes: a detection module, configured to: when it is detected that a navigation destination searched for by a user is in a target area, send prompt information about whether to select a parking space to the user; a first display module, configured to display information about a parking space in the target area in response to an operation of the user for confirming to select a parking space; a second display module, configured to display a navigation route in response to an operation of the user for selecting a target parking space from the parking space in the target area, where the navigation route includes a route from a location of an ego vehicle to the target parking space; and a control module, configured to: when it is detected that the ego vehicle has entered the target area, control the ego vehicle to perform automated valet parking based on the navigation route.

According to the fourth aspect, in a first possible implementation of the fourth aspect, the parking space in the target area includes a favorited parking space and/or a recommended parking space.

According to the fourth aspect or the first possible implementation of the fourth aspect, in a second possible implementation of the fourth aspect, the first display module is further configured to display a distribution diagram of the parking space in the target area, where parking spaces corresponding to different priorities are represented by different icons.

According to the fourth aspect or the foregoing possible implementations of the fourth aspect, in a third possible implementation of the fourth aspect, the first display module is further configured to displaying a list of parking spaces in the target area, where the parking space in the list is sequentially sorted based on a corresponding priority.

According to the foregoing possible implementations of the fourth aspect, in a fourth possible implementation of the fourth aspect, the favorited parking space includes at least one of a default parking space, an exclusive parking space, or a non-exclusive parking space, where priorities corresponding to the default parking space, the exclusive parking space, and the non-exclusive parking space decrease successively.

According to the fourth aspect and the foregoing possible implementations of the fourth aspect, in a fifth possible implementation of the fourth aspect, the apparatus further includes: a prompting module, configured to: determine whether the target parking space is the favorited parking space when it is detected that the ego vehicle has been parked in the target parking space; and if the target parking space is a non-favorited parking space, send prompt information about whether to favorite the target parking space to the user; or determine whether the target parking space is the favorited parking space in response to the operation of the user for selecting the target parking space from the parking space in the target area; and if the target parking space is a non-favorited parking space, send prompt information about whether to favorite the target parking space to the user.

According to the fifth possible implementation of the fourth aspect, in a sixth possible implementation of the fourth aspect, the apparatus further includes: a favoriting module, configured to: display an editing page in response to an operation of the user for confirming to favorite the target parking space; and mark the target parking space as the favorited parking space in response to an operation of the user for editing a parking space type and/or a parking space name, where the parking space type includes any one of default, exclusive, and non-exclusive.

According to the foregoing possible implementations of the fourth aspect, in a seventh possible implementation of the fourth aspect, the detection module is further configured to: obtain location information of the ego vehicle; and detect, based on the location information of the ego vehicle and location information of a boundary of the target area, whether the ego vehicle has entered the target area.

According to the foregoing possible implementations of the fourth aspect, in an eighth possible implementation of the fourth aspect, the control module is further configured to: when it is detected that the target parking space is occupied, search for a vacant parking space; and if the vacant parking space is found, automatically park in the vacant parking space and send location information of the vacant parking space to the user; and if the vacant parking space is not found, send prompt information about taking over the vehicle to the user; or when it is detected that the target parking space is occupied, send prompt information about taking over the vehicle to the user.

According to the foregoing possible implementations of the fourth aspect, in a ninth possible implementation of the fourth aspect, the control module is further configured to: obtain information about the vacant parking space in the target area; and determine an optimal vacant parking space in the vacant parking space when it is detected that the target parking space is occupied, and control the ego vehicle to park in the optimal vacant parking space.

According to a fifth aspect, an embodiment of this application provides an automated valet parking apparatus, including a processor; a display, configured to display a human-machine interaction interface; and a memory, configured to store instructions that can be executed by the processor. The processor is configured to execute the instructions to implement the automated valet parking method according to the first aspect or the possible implementations of the first aspect, or implement the automated valet parking method according to the second aspect or the possible implementations of the second aspect.

According to a sixth aspect, an embodiment of this application provides an automated valet parking system. The automated valet parking system includes the automated valet parking apparatus according to the third aspect, the fourth aspect, or the fifth aspect.

According to a seventh aspect, an embodiment of this application provides a vehicle. The vehicle includes the automated valet parking apparatus according to the third aspect, the fourth aspect, or the fifth aspect, or the automated valet parking system according to the sixth aspect.

According to an eighth aspect, an embodiment of this application provides a non-volatile computer-readable storage medium, storing computer program instructions. When the computer program instructions are executed by a processor, the automated valet parking method according to the first aspect or the possible implementations of the first aspect is implemented, or the automated valet parking method according to the second aspect or the possible implementations of the second aspect is implemented.

According to a ninth aspect, an embodiment of this application provides a computer program product, including instructions. When the computer program product runs on a processor, the automated valet parking method according to the first aspect or the possible implementations of the first aspect is implemented, or the automated valet parking method according to the second aspect or the possible implementations of the second aspect is implemented.

For technical effects of the third aspect to the ninth aspect and the possible implementations, refer to the first aspect and the possible implementations of the first aspect, or the second aspect and the possible implementations of the second aspect.

### BRIEF DESCRIPTION OF DRAWINGS

FIG. 1 is a schematic diagram of an application scenario of an automated valet parking method according to an embodiment of this application;
FIG. 2 is a schematic diagram of an architecture of an automated valet parking system according to an embodiment of this application;
FIG. 3 is a flowchart of an automated valet parking method according to an embodiment of this application;
FIG. 4 is a schematic diagram of an interaction interface for automated valet parking according to an embodiment of this application;
FIG. 5 is a schematic diagram of another interaction interface for automated valet parking according to an embodiment of this application;
FIG. 6 is a schematic diagram of another interaction interface for automated valet parking according to an embodiment of this application;
FIG. 7(a) and FIG. 7(b) are a schematic diagram of another interaction interface for automated valet parking according to an embodiment of this application;
FIG. 8(a) and FIG. 8(b) are a schematic diagram of another interaction interface for automated valet parking according to an embodiment of this application;
FIG. 9(a) and FIG. 9(b) are a schematic diagram of another interaction interface for automated valet parking according to an embodiment of this application;
FIG. 10 is a schematic diagram of an interaction interface for displaying a real-time picture of parking according to an embodiment of this application;
FIG. 11(a) and FIG. 11(b) are a schematic diagram of an interaction interface for favoriting a parking space according to an embodiment of this application;
FIG. 12(a) to FIG. 12(c) are a schematic diagram of another interaction interface for favoriting a parking space according to an embodiment of this application;
FIG. 13(a) to FIG. 13(c) are a schematic diagram of another interaction interface for automated valet parking according to an embodiment of this application;
FIG. 14 is a schematic diagram of another interaction interface for automated valet parking according to an embodiment of this application;
FIG. 15 is a flowchart of another automated valet parking method according to an embodiment of this application;
FIG. 16(a) to FIG. 16(c) are a schematic diagram of another interaction interface for automated valet parking according to an embodiment of this application;
FIG. 17(a) and FIG. 17(b) are a schematic diagram of another interaction interface for automated valet parking according to an embodiment of this application;
FIG. 18(a) and FIG. 18(b) are a schematic diagram of another interaction interface for automated valet parking according to an embodiment of this application;
FIG. 19 is a schematic diagram of a structure of an automated valet parking apparatus according to an embodiment of this application;
FIG. 20 is a schematic diagram of a structure of another automated valet parking apparatus according to an embodiment of this application; and
FIG. 21 is a schematic diagram of a structure of another automated valet parking apparatus according to an embodiment of this application.

### DESCRIPTION OF EMBODIMENTS

Various example embodiments, features, and aspects of this application are described below in detail with reference to the accompanying drawings. Identical reference signs in the accompanying drawings indicate elements that have a same or similar function. Although various aspects of embodiments are shown in the accompanying drawings, unless otherwise specified, the accompanying drawings do not need to be drawn to scale.

The specific term "example" herein means "used as an example, embodiment, or illustration". Any embodiment described as an "example" is not necessarily explained as being more preferred or better than other embodiments.

An application scenario of an automated valet parking method provided in an embodiment of this application is first described below with examples.

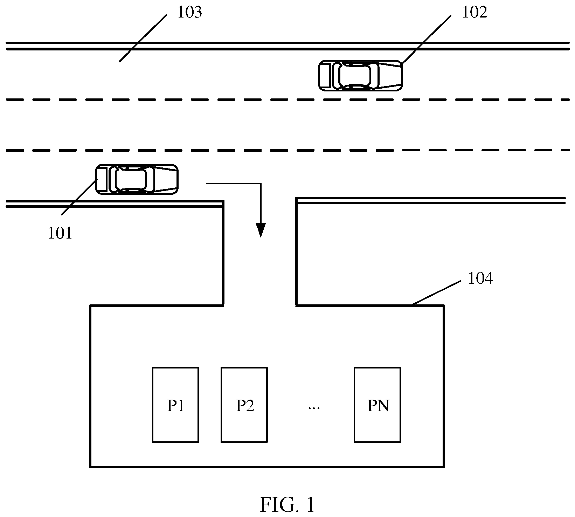

FIG. 1 is a schematic diagram of an application scenario of an automated valet parking method according to an embodiment of this application. As shown in FIG. 1, the scenario may include an ego vehicle 101, another vehicle 102, a road 103, and a parking lot 104. The parking lot 104 may include a plurality of parking spaces P1, P2, ..., and PN. N is a positive integer. The ego vehicle 101 and the another vehicle 102 move on the road 103. An arrow in FIG. 1 shows a moving direction of the ego vehicle 101, and the ego vehicle 101 enters the parking lot 104 along the road 103.

For example, the road 103 may be a public road, and the parking lot 104 may be a surface parking lot, an underground parking lot, a stereo parking lot, a street parking lot, or the like outside the public road, for example, may be a parking lot in a residential area, a business district, an office park, or the like. A parking space in the parking lot 104 may be a parking space with lines drawn on the ground, a parking space without drawn lines, a parking spot, or the like. Based on a form of the parking space, the parking space in the parking lot 104 may include a vertical parking space, an angled parking space, a horizontal parking space, and the like.

It should be noted that FIG. 1 shows only one ego vehicle, another vehicle, and one parking lot. It should be understood that this does not limit a type and a quantity of vehicles and parking lots in the application scenario. In addition, the application scenario described in this embodiment of this application is intended to describe a technical solution in this embodiment of this application more clearly, and do not constitute a limitation on the technical solution provided in this embodiment of this application. A person skilled in the art can learn that, for emergence of another similar or new application scenario, the technical solution provided in this embodiment of this application is also applicable to a similar technical problem.

For example, an automated valet parking system may be configured on the ego vehicle 101 to implement an automated valet parking function.

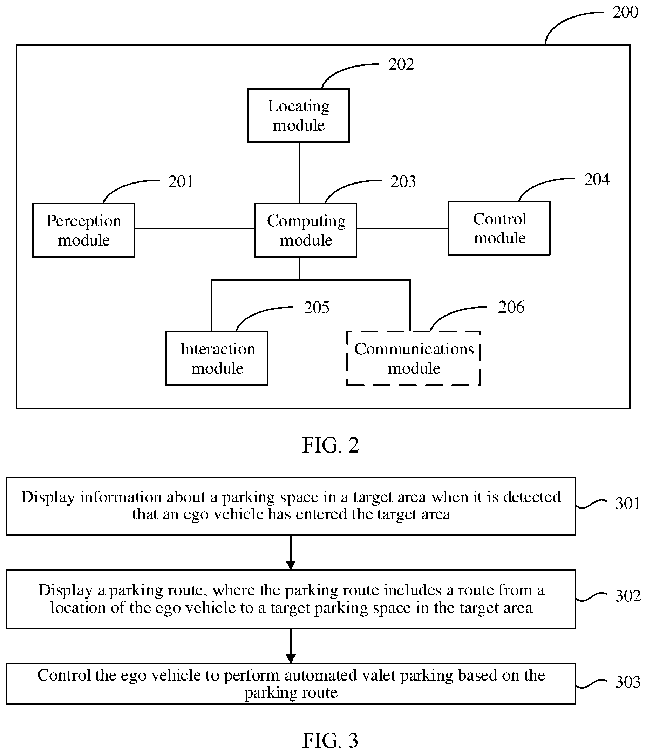

FIG. 2 is a schematic diagram of an architecture of an automated valet parking system according to an embodiment of this application. As shown in FIG. 2, an automated valet parking system 200 may include a perception module 201, a locating module 202, a computing module 203, a control module 204, and an interaction module 205.

The perception module 201 may be configured to collect data on a surrounding environment of an ego vehicle 101, to perceive related information in the surrounding environment of the ego vehicle 101, for example, may perceive related information, for example, a lane line, a parking space, a pedestrian, another vehicle, and an obstacle in the environment. For example, the perception module 201 may include one or more sensors, for example, a camera, a millimeter-wave radar, a lidar, an ultrasonic radar, and another sensor, mounted around the ego vehicle 101.

The locating module 202 may be configured to provide location information of the ego vehicle 101, and may further provide orientation information of the ego vehicle 101. For example, the locating module 202 may include a global navigation satellite system (Global Navigation Satellite System, GNSS), an inertial navigation system (Inertial Navigation System, INS), and the like. The GNSS may include one or more of a BeiDou navigation satellite system (BeiDou Navigation Satellite System, BDS), a global positioning system (Global Positioning System, GPS), a Glonass (GLONASS) navigation satellite system, a Galileo (GALILEO) navigation satellite system, and the like, and may be used to determine the location information of the ego vehicle 101. The INS may include one or more of an inertial measurement unit (inertial measurement unit, IMU), an odometer (odometer, ODOM), an accelerometer, a gyroscope, and the like, and may be used to determine the location information and the orientation information of the ego vehicle 101. In some examples, the locating module 202 may combine with the perception module 201 to determine the location information and the orientation information of the ego vehicle 101 through fusion processing on the collected data.

The computing module 203 may be configured to process various types of data related to the automated valet parking function, and is used for decision-making and regulation control related to the automated valet parking function. For example, the computing module 203 may be integrated into an autonomous driving system, advanced driving assistance systems (Advanced Driver Assistance Systems, ADAS), an onboard central processing system, or the like on the ego vehicle 101. Alternatively, the computing module 203 may be deployed on a cloud device, and implements data communications with the perception module 201, the locating module 202, the control module 204, the interaction module 205, or the like by using a wireless communications technology.

The control module 204 may be configured to control an execution device on the ego vehicle 101, for example, a steering system, a braking system, or an accelerator, related to the automated valet parking function, so that results of decision-making and regulation control by using the computing module 203 are effectively executed. For example, the control module 204 may include a plurality of controllers that each are configured to control a corresponding execution device on the ego vehicle 101, where for example, a steering controller is configured to control the steering system, a braking controller is configured to control the braking system, and an accelerator controller is configured to control the accelerator; or may include an integrated controller, configured to control a plurality of execution devices.

The interaction module 205 may be configured to provide information for a user and receive a command of the user. The interaction module 205 may provide information related to the automated valet parking function for the user by using a visual icon, a voice broadcast, or the like. For example, the interaction module 205 may be an onboard display system, for example, may be a human-machine interface (human-machine interface, HMI) configured on the ego vehicle 101. A user in a cockpit of the ego vehicle 101 may receive the information related to the automated valet parking function by using the HMI, and may further perform an operation, for example, of selecting a parking space and sending a command, to implement an interaction function related to automated valet parking. The interaction module 205 may alternatively be a display system of a mobile terminal (for example, a smartphone, a tablet computer, or a wearable device). For example, a display of the mobile terminal may provide a human-machine interaction interface for the user, and the mobile terminal may implement data communications with the computing module 203 by using a wireless communications technology. A user in the cockpit of the ego vehicle 101 or not in the cockpit may receive the information related to the automated valet parking function by using the mobile terminal, and perform an operation, for example, of selecting a parking space and sending a command, to implement an interaction function related to automated valet parking.

For example, the automated valet parking system 200 may further include a communications module 206 that may be configured for communications of the ego vehicle 101 with another device. The another device may include a mobile terminal, a cloud device, another vehicle 102, a device in a parking lot 104, and the like, and the communications may be implemented through a wireless communications connection, for example, 2G/3G/4G/5G, Bluetooth, frequency modulation (frequency modulation, FM), a wireless local area network (wireless local area network, WLAN), long term evolution (long time evolution, LTE), vehicle to everything (vehicle to everything, V2X), vehicle to vehicle (Vehicle to Vehicle, V2V), or long term evolution-vehicle (long term evolution vehicle, LTE-V). For example, the ego vehicle 101 may communicate with a server in the parking lot 104 or a cloud device, to obtain information about a vacant parking space in the parking lot 104.

The perception module 201, the locating module 202, the computing module 203, the control module 204, the interaction module 205, and another module coordinate with each other to implement the automated valet parking function.

In an example, the ego vehicle 101 moves in a direction indicated by an arrow in FIG. 1. The locating module 202 sends location information of the ego vehicle 101 to the computing module 203. After determining, based on the location information of the ego vehicle 101, that the ego vehicle 101 has entered the parking lot 104, the computing module 203 displays, by using the interaction module 205, an interaction interface including information about a parking space in the parking lot 104, so that the user selects a preferred parking space for parking. The interaction module 205 receives a command of the user for selecting a parking space, and notifies the computing module 203 of the parking space selected by the user. The computing module 203 plans a parking route that enables the ego vehicle 101 to move to the parking space selected by the user, and displays the parking route to the user by using the interaction module 205. The interaction module 205 receives a command of the user for starting automated valet parking, and notifies the computing module 203. The computing module 203 generates a control command by using the control module 204 to control an execution device of the ego vehicle 101, so that the ego vehicle 101 moves to the parking space selected by the user based on the parking route, and automatically parks in the parking space, to implement automated valet parking. In the foregoing parking process, the perception module 201 sends perceived related information from the surrounding environment of the ego vehicle 101 to the computing module 203, so that the computing module 203 adjusts a speed, an orientation, or the like of the ego vehicle 101 by using the control module 204.

In another example, when the user sets the parking lot 104 as a navigation destination, the interaction module 205 displays, to the user, an interaction interface including information about a parking space in the parking lot 104. The interaction module 205 receives a command of the user for selecting a parking space, and notifies the computing module 203 of the parking space selected by the user. The computing module 203 plans a navigation route on which the ego vehicle 101 can move to the parking space selected by the user. The ego vehicle 101 may move based on the navigation route in a manual driving mode or an autonomous driving mode. The locating module 202 sends location information of the ego vehicle 101 to the computing module 203. After the computing module 203 determines, based on the location information of the ego vehicle 101, that the ego vehicle 101 has entered the parking lot 104, the computing module 203 generates a control command by using the control module 204 to control an execution device of the ego vehicle 101, so that the ego vehicle 101 moves to the parking space selected by the user based on the navigation route, and automatically parks in the parking space, to implement automated valet parking. In the foregoing parking process, the perception module 201 sends perceived related information from the surrounding environment of the ego vehicle 101 to the computing module 203, so that the computing module 203 adjusts a speed, an orientation, or the like of the ego vehicle 101 by using the control module 204.

An automated valet parking method according to an embodiment of this application is described below in detail.

FIG. 3 is a flowchart of an automated valet parking method according to an embodiment of this application. For example, the method may be performed by the ego vehicle 101 in FIG. 1, the automated valet parking system 200 in FIG. 2, or one or more modules in the automated valet parking system 200. As shown in FIG. 3, the method may include the following steps.

Step 301: Display information about a parking space in a target area when it is detected that an ego vehicle has entered a target area.

The target area may include an area with surface or underground parking spaces, for example, a shopping mall, a residential area, a park, a roadside area, or a building. For example, the target area may be the parking lot 104 in FIG. 1.

This embodiment of this application provides two manners of detecting whether the ego vehicle has entered the target area.

In a manner 1, an automated valet parking system may obtain location information of the ego vehicle; and detect, based on the location information of the ego vehicle and location information of a boundary of the target area, whether the ego vehicle has entered the target area.

For example, the boundary of the target area may be marked in advance by using a virtual fence (also referred to as a geofence). For example, the target area is the parking lot 104 in FIG. 1, and the boundary of the parking lot 104 may be marked in advance by using a virtual fence. In a process in which the ego vehicle is moving, the automated valet parking system may obtain location information of the ego vehicle at each moment, and detect, based on location information of the ego vehicle at an adjacent moment and location information of the virtual fence, whether the ego vehicle has entered the parking lot 104. If a location of the ego vehicle at a current moment is within the virtual fence, and a location of the ego vehicle at a previous moment is outside the virtual fence, it is detected that the ego vehicle has entered the parking lot 104.

In a manner 2, an automated valet parking system may receive external information, and detect, based on the received information, whether the ego vehicle has entered the target area.

For example, the target area is the parking lot 104 in FIG. 1. A server of the parking lot 104 may periodically broadcast information to the outside, and the broadcast information includes a unique identifier of the parking lot 104. The automated valet parking system may perceive environment information at an entrance of the parking lot 104, for example, an identifier of the entrance of the parking lot and a barrier gate bar of the parking lot. When receiving the broadcast information, the automated valet parking system may determine, based on the unique identifier in the broadcast information, that the broadcast information is sent by the server of the parking lot 104; and determine, with reference to the perceived environment information at the entrance of the parking lot 104, that the ego vehicle has entered the parking lot 104.

For example, the target area is the parking lot 104 in FIG. 1. The server of the parking lot 104 may obtain vehicle information, for example, a license plate number of the vehicle, captured by an image collection apparatus at the entrance of the parking lot. When the image collection apparatus captures the license plate number of the ego vehicle, the server of the parking lot 104 may notify that the ego vehicle has entered the parking lot 104, and the ego vehicle determines, based on received notification information, that the ego vehicle has entered the parking lot 104.

When the ego vehicle enters the target area, the ego vehicle may be in a plurality of driving states. For example, the ego vehicle may be driven without navigation. For example, a user may autonomously drive the ego vehicle. For example, the ego vehicle may be driven based on a navigation route. For example, the user may drive the ego vehicle based on the navigation route, or the ego vehicle may move based on the navigation route in an autonomous driving mode. A destination corresponding to the navigation route is a place that is in the target area and that is other than the parking space in the target area. For example, the target area is the parking lot 104 in FIG. 1, and the user may set a road inside the parking lot 104 as the navigation destination before the ego vehicle enters the parking lot 104.

Considering that the user has a parking requirement after the ego vehicle has entered the target area, when detecting that the ego vehicle has entered the target area, the automated valet parking system automatically displays the information about the parking space in the target area, so that the user can autonomously select a preferred parking space for parking. In addition, the user does not need to drive the ego vehicle to a specific location, and the user does not need to exit the vehicle, forming smooth transition from a current driving status of the ego vehicle. This improves user experience.

The parking space in the target area may include a marked parking space, an unmarked parking space, and the like. The marked parking space represents a parking area marked out by a parking line (parking space line) on the ground, and the marked parking space usually has a fixed location, form, size, and the like. The unmarked parking space represents a parking area (or parking spot) not marked out by a parking line on the ground, and usually has no fixed location, form, size, and the like. For example, a plain parking lot without a parking line on the ground may include a plurality of unmarked parking spaces. For example, a parking area between vehicles parked side by side in the parking lot may be used as an unmarked parking space. It can be understood that a location, a form, a size, and the like of the unmarked parking space are determined based on locations and parking directions of the vehicles parked side by side and a distance between the vehicles.

For example, the parking space in the target area may include a favorited parking space and/or a recommended parking space. For example, the favorited parking space and the recommended parking space may each be the marked parking space.

The favorited parking space represents a parking space, in the target area, that has been favorited by a user, and there may be one or more favorited parking spaces. For example, the favorited parking space may include at least one of a default parking space, an exclusive parking space, or a public parking space. When favoriting a parking space, the user may mark the favorited parking space as the default parking space, the exclusive parking space, or the public parking space. The default parking space is usually a private parking space for the user, for example, may be a designated parking space in a residential complex where the user lives, or may be a designated parking space of a company where the user works. The exclusive parking space is usually a parking space that is not occupied or a private parking space for a user. A non-exclusive parking space is usually the public parking space. For example, there may be one default parking space, and there may be a plurality of exclusive or non-exclusive parking spaces.

The recommended parking space represents a parking space in the target area selected based on a parking habit of the user. There may be one or more recommended parking spaces. For example, the automated valet parking system may perform selection based on a location of a parking space that the user is used to selecting. If the user prefers a parking space near an exit, a parking space near an exit in the target area may be selected to be the recommended parking space. The automated valet parking system may perform selection based on a form of a parking space that the user is used to preferring. If the user prefers a vertical parking space, a vertical parking space in the target area may be selected to be the recommended parking space. The automated valet parking system may perform selection based on a size of a parking space that the user is used to selecting. If the user prefers a larger parking space, a larger parking space in the target area may be selected to be the recommended parking space. The automated valet parking system may select, based on a quantity of times the user has selected each parking space for parking, a parking space in the target area that the user has selected for parking a largest quantity of times to be the recommended parking space. The automated valet parking system may alternatively select, based on time at which the user has parked the vehicle in each parking space, a parking space in the target area that the user has selected for parking within a recent period of time to be the recommended parking space. It can be understood that, the automated valet parking system may select the recommended parking space with reference to one or more parking habits of the user.

For example, when there is already the favorited parking space, the automated valet parking system may display the favorited parking space, and may further display both the favorited parking space and the recommended parking space; or when there is no favorited parking space, the automated valet parking system may display the recommended parking space.

The favorited parking space is a parking space that is favorited by the user based on a preference of the user, and the recommended parking space is a parking space selected based on a parking habit of the user. Therefore, compared with another parking space in the target area, the user is more likely to select the favorited parking space or the recommended parking space to be a parking space for parking this time. In this way, when it is detected that the ego vehicle has entered the target area, the automated valet parking system automatically displays information about the favorited parking space and/or information about the recommended parking space in the target area, so that the user can conveniently and quickly select a preferred parking space for parking, improving user experience.

For example, the information about the parking space in the target area may include one or more of names, serial numbers, locations, forms, sizes, and the like of the parking space in the target area. The information about the parking space in the target area may be pre-stored in the automated valet parking system. Alternatively, the automated valet parking system may obtain the information about the parking space in the target area from a server in the target area or a cloud device. Alternatively, the automated valet parking system may obtain the information about the parking space in the target area based on perceived data on a surrounding environment of the ego vehicle.

Step 302: Display a parking route.

The parking route includes a route from a location of the ego vehicle to a target parking space in the target area.

In a possible implementation, the parking route is displayed in response to an operation of a user for selecting the target parking space from the parking space in the target area. For example, the target parking space may be the marked parking space.

For example, the user may view the information about the parking space in the target area displayed by the automated valet parking system, and may select a preferred parking space from the parking space in the target area to be the target parking space by tapping, voice, a gesture, using a physical button, or the like. For example, the user may select a parking space to be the target parking space by tapping an area or an icon corresponding to a specific parking space displayed in an interaction interface. Alternatively, the user may select, a specific parking space in the target area displayed on an interaction interface to be the target parking space through an operation, for example, by using a physical button on the ego vehicle, a voice command, or a gesture.

After receiving the operation of the user for selecting the target parking space, the automated valet parking system may determine the target parking space that the user expects for parking, plan the parking route from the location of the ego vehicle to the target parking space based on the location information of the ego vehicle and location information of the target parking space, and display the parking route in the interaction interface for the user to view.

For example, considering that the default parking space is usually a private parking space for the user, and is most likely to be selected by the user to be the target parking space, the automated valet parking system may plan a parking route from the location of the ego vehicle to the default parking space in advance based on the location of the ego vehicle and a location of the default parking space, so that the parking route is directly displayed after a user command for using the default parking space as the target parking space is received. This reduces a delay and improves user experience. For example, after it is detected that the ego vehicle has entered the target area, the automated valet parking system may periodically update the parking route based on latest location information of the ego vehicle, and display a latest parking route when the user selects the default parking space.

For example, when the displayed parking space in the target area includes a plurality of parking spaces, the user may change a selected target parking space by tapping, voice, a gesture, using a physical button, or the like. The automated valet parking system plans a parking route from the location of the ego vehicle to a changed target parking space based on the location information of the ego vehicle and location information of the changed target parking space, and displays the parking route in the interaction interface. In this way, the automated valet parking system may display different parking routes in response to an operation of the user for changing the target parking space. The user may autonomously select an optimal parking space to be a final target parking space with reference to the displayed different parking routes. For example, the user may select a parking space corresponding to a shortest parking route to be the final target parking space, to satisfy a requirement of the user.

For example, the automated valet parking system may obtain, based on an electronic map of the target area, information, for example, the location information of the target parking space, a layout of a road in the target area, and a length and a width of the road, to plan the parking route from the location of the ego vehicle to the target parking space. For example, the automated valet parking system may pre-store the electronic map of the target area, the automated valet parking system may obtain the electronic map of the target area from the server in the target area or the cloud device, or the automated valet parking system may construct the electronic map of the target area based on the perceived data on the surrounding environment of the ego vehicle.

In a possible implementation, the automated valet parking system may determine the target parking space in the target area, and display the parking route. For example, the target parking space may be the unmarked parking space.

If the target area is a plain parking lot, the automated valet parking system may determine an available unmarked parking space in the target area based on perceived information about the surrounding environment, autonomously determine the target parking space, and plan a parking route from the location of the ego vehicle to the target parking space.

The available unmarked parking space represents an unmarked parking space of a size that satisfies a parking requirement of the ego vehicle. For example, when there are a plurality of available unmarked parking spaces, the automated valet parking system may select an optimal unmarked parking space to be the target parking space based on the parking habit of the user.

Step 303: Control the ego vehicle to perform automated valet parking based on the parking route.

In a possible implementation, after autonomously determining the target parking space, the automated valet parking system may control the ego vehicle to perform automated valet parking based on the parking route.

In a possible implementation, in response to an automated valet parking command sent by the user, the automated valet parking system controls the ego vehicle to perform automated valet parking based on the parking route.

For example, the automated valet parking system may prompt, by using at least one of a text, voice, a color, icon blinking, vibration, or the like, the user whether to start automated valet parking.

For example, after selecting the target parking space, the user may trigger the automated valet parking command by tapping, voice, a gesture, using a physical button, or the like. For example, the user may trigger the automated valet parking command by tapping a virtual button in the interaction interface for starting automated valet parking; may trigger the automated valet parking command by using a physical button on the ego vehicle; may start automated valet parking by using a voice command; or may trigger the automated valet parking command by a specific gesture.

After receiving the automated valet parking command triggered by the user, the automated valet parking system may control, in response to the automated valet parking command, the ego vehicle to perform automated valet parking based on the foregoing parking route. It can be understood that, if the user changes the target parking space, the parking route is a route from the location of the ego vehicle to a target parking space finally selected by the user.

For example, the automated valet parking system may control the ego vehicle to move to a place near the target parking space, and automatically park the ego vehicle in the target parking space, to complete automated valet parking. In a process of parking in the target parking space, the automated valet parking system may adjust a speed, a posture, or the like of the ego vehicle based on the perceived target parking space and perceived information, for example, a size, a location, and a distance of a surrounding obstacle, so that the ego vehicle can safely park in the target parking space.

It should be noted that, in a process from when the ego vehicle enters the target area to when the ego vehicle parks in the target parking space, the user may view the information about the parking space in the target area, select the target parking space, view the parking route, or trigger the automated valet parking command in an onboard HMI or the like in a cockpit of the ego vehicle. The user may alternatively exit the vehicle anytime and anywhere, and view the information about the parking space in the target area, select the target parking space, view the parking route, or trigger the automated valet parking command by using a mobile terminal or the like. This greatly reduces a limitation on flexibility and autonomy of parking for the user, and improves user experience.

In this embodiment of this application, when it is detected that the ego vehicle has entered the target area, the information about the parking space in the target area is automatically displayed, so that the user can autonomously select the target parking space. In addition, the user does not need to drive the ego vehicle to a specific location, and the user may not exit the vehicle, forming smooth transition from a current driving status of the ego vehicle. This improves flexibility and autonomy of parking for the user. In some examples, the parking space in the target area may include the favorited parking space and/or the recommended parking space. The user may conveniently and quickly select, based on information about a plurality of types of parking spaces in the target area, the preferred target parking space for parking, to satisfy a requirement of the user. The parking route is displayed, and the ego vehicle is controlled to perform automated valet parking based on the parking route. In this way, the ego vehicle can autonomously complete parking route planning, automated valet parking, and the like, so that a hardware requirement on the target area is reduced, and there is a wide application scope. In addition, the user may monitor a parking process. This improves security and control of the user, and improves user experience.

For ease of description, an interaction process in the automated valet parking method according to this embodiment of this application is further described below by using an example in which an interaction function related to automated valet parking is implemented by using an HMI on the ego vehicle.

In a possible implementation, that the information about the parking space in the target area is displayed may include: A list of parking spaces in the target area is displayed, where the parking space in the list is sequentially sorted based on a corresponding priority. A parking space of a higher priority is more likely to be selected by the user to be the target parking space. The parking space of a higher priority is preferentially displayed in the list, so that the user can view the parking space more easily, improving efficiency of selecting the target parking space.

For example, a quantity of parking spaces displayed in the list is less than a preset threshold, so that the user can select the target parking space more conveniently and quickly.

Compared with another parking space, the favorited parking space is a parking space favorited by the user based on a preference of the user, and there is a high probability that the user selects the favorited parking space to be the target parking space. In some examples, the list of parking spaces may include only the favorited parking space, so that efficiency of selecting the target parking space is further improved for the user. For example, when there are a plurality of favorited parking spaces, the favorited parking spaces are sequentially sorted based on corresponding priorities.

For example, priorities of the default parking space, the exclusive parking space, and the public parking space decrease successively. The default parking space means that a possibility of being occupied is not high, and a user usually considers parking the ego vehicle in the default parking space. Therefore, a priority of the default parking space is set to a highest priority, and the default parking space may be placed at the top of the list, and is most easily viewed by the user for the user to make a selection. The exclusive parking space means that the user usually considers parking in the exclusive parking space when a private parking space for the user is occupied or there is no private parking space for the user in the target area. Therefore, a priority of the exclusive parking space is set to a medium priority, and the exclusive parking space may be placed after the default parking space in the list for the user to make a selection when the default parking space is unavailable. The non-exclusive parking space means that there is a relatively high probability that the non-exclusive parking space is occupied by another vehicle because any vehicle that has entered the target area can park in the non-exclusive parking space. Therefore, a priority of the non-exclusive parking space is set to a lowest priority, and the non-exclusive parking space may be placed after the default parking space and the exclusive parking space in the list for the user to make a selection when, for example, there is no default parking space or exclusive parking space, or neither the default parking space nor the exclusive parking space is available.

For example, when there are a plurality of exclusive parking spaces or non-exclusive parking spaces, a parking space that best satisfies the parking habit of the user may be placed before all other parking spaces of a same type.

In some examples, when there is no favorited parking space, the list may include only the recommended parking space. For example, when there are a plurality of recommended parking spaces, the recommended parking spaces are sequentially sorted based on corresponding priorities. For example, the priorities corresponding to the recommended parking spaces may be determined based on relative degrees of various parking habits of the user. For example, with reference to historical parking data of the user, it can be learned that the user prefers a parking space near an exit to a vertical parking space. Therefore, a priority of a recommended parking space selected based on a location of a parking space is higher than a priority of a recommended parking space selected based on a form of a parking space.

In some examples, the list may include the favorited parking space and the recommended parking space. The user is more likely to select the favorited parking space, not the recommended parking space, to be the target parking space. Therefore, a priority of the favorited parking space may be preset higher than a priority of the recommended parking space, and all favorited parking spaces in the list are placed before the recommended parking space.

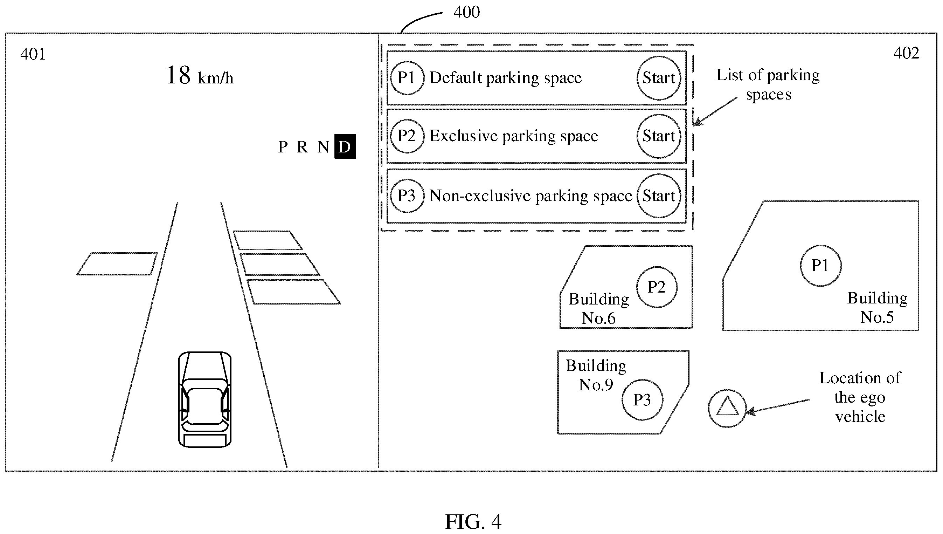

For example, FIG. 4 is a schematic diagram of an interaction interface for automated valet parking according to an embodiment of this application. The user may autonomously drive the ego vehicle into the target area, and when the automated valet parking system detects that the ego vehicle has entered the target area, an interaction interface 400 is displayed on the HMI. As shown in FIG. 4, the interaction interface 400 may include a display area 401 and a display area 402. A speed of the ego vehicle (the speed is 18 km/h in FIG. 4), a gear of the vehicle (for example, a gear P for parking, a gear R for reversing, a gear N for neutral, and a gear D for driving, where a current gear of the ego vehicle is D in FIG. 4), a surrounding embodiment of the ego vehicle, an identifier of the ego vehicle, and other information may be displayed in the display area 401. An electronic map, the location of the ego vehicle, the list of parking spaces, and other information may be displayed in the display area 402. The list of parking spaces includes three favorited parking spaces P 1, P2, and P3. P1 is a default parking space, P2 is an exclusive parking space, and P3 is a non-exclusive parking space. A location point corresponding to each parking space in the list of parking spaces is displayed on the electronic map. P1 is located in a building 5, P2 is located in the building 5, and P3 is located in a building 9. For example, location information corresponding to each parking space, a distance between each parking space and the ego vehicle, and the like (not shown in the figure) may be further displayed in the list of parking spaces. The user may quickly view information about the parking space by using the list of parking spaces. For example, the user may further perform an operation, for example, of zooming in or zooming out the electronic map, to view more information about P1, P2, and P3, or information about another parking space in the target area.

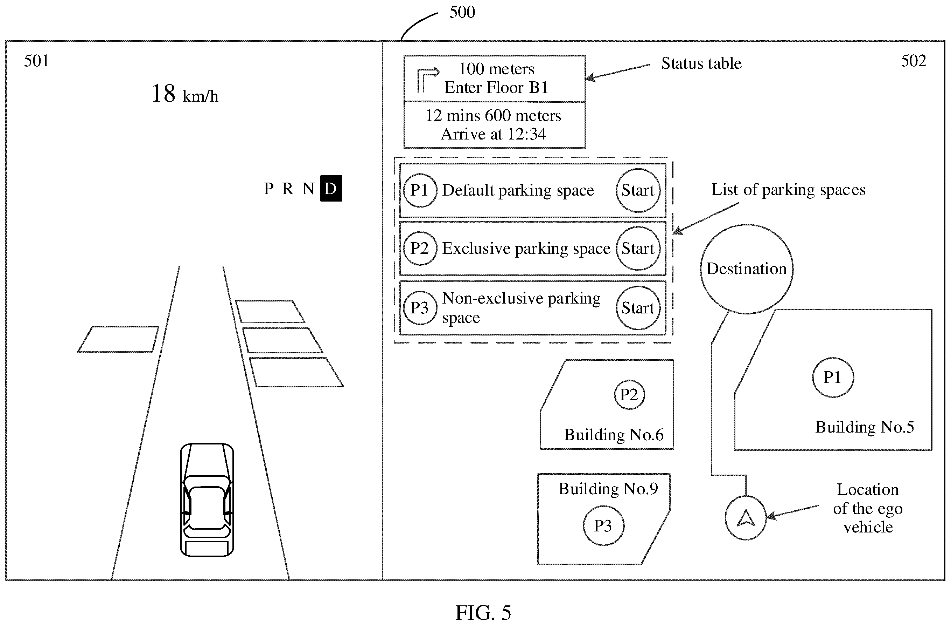

FIG. 5 is a schematic diagram of another interaction interface for automated valet parking according to an embodiment of this application. The ego vehicle may enter the target area based on the navigation route, and a navigation destination is a place that is not a parking space in the target area. When the automated valet parking system detects that the ego vehicle has entered the target area, an interaction interface 500 is displayed in the HMI. As shown in FIG. 5, the interaction interface 500 may include a display area 501 and a display area 502. The display area 501 is the same as the display area 401 in FIG. 4. A navigation page, the location of the ego vehicle, the list of parking spaces, a navigation status table (including remaining navigation time, a remaining distance, and other information), and other information may be displayed in the display area 502. For information about the parking space displayed in the list of parking spaces, refer to that in the interaction interface 400. The user may quickly view the information about the parking space by using the list of parking spaces, or may perform an operation, for example, of zooming in or zooming out an electronic map, to view more information about the parking space.

In a possible implementation, that the information about the parking space in the target area is displayed may include: A distribution diagram of the parking space in the target area is displayed, where parking spaces corresponding to different priorities are represented by different icons.

For detailed descriptions of a priority corresponding to each type of parking space, refer to the foregoing descriptions. A parking space of a higher priority is more likely to be selected by the user to be the target parking space. The parking space of a higher priority may be represented by a more distinct icon in the distribution diagram, so that the user can view the parking space more easily, improving efficiency of selecting the target parking space. In addition, by using the distribution diagram, the user can view the information about the parking space more visually.

For example, the distribution diagram of the parking space may be an electronic map of the target area, and each of the icons may include a pattern, brightness, a color, and the like. For example, different patterns may be used in the distribution diagram of the parking space to represent parking spaces of different priorities. For example, the default parking space may be displayed by using one pattern, and the exclusive parking space may be displayed by using another pattern. For example, a same color and different shades may be used to represent parking spaces of different priorities. For example, a darker gray may be used to represent the default parking space, and a lighter gray may be used to represent the exclusive parking space. A darker shade indicates a higher priority corresponding to a parking space.

For example, in the distribution diagram, only information about the favorited parking space or only information about the recommended parking space may be displayed, both information about the favorited parking space and information about the recommended parking space may be displayed, or information about another parking space in the target area may be displayed. It can be understood that, compared with the favorited parking space or the recommended parking space, another parking space has a lowest priority.

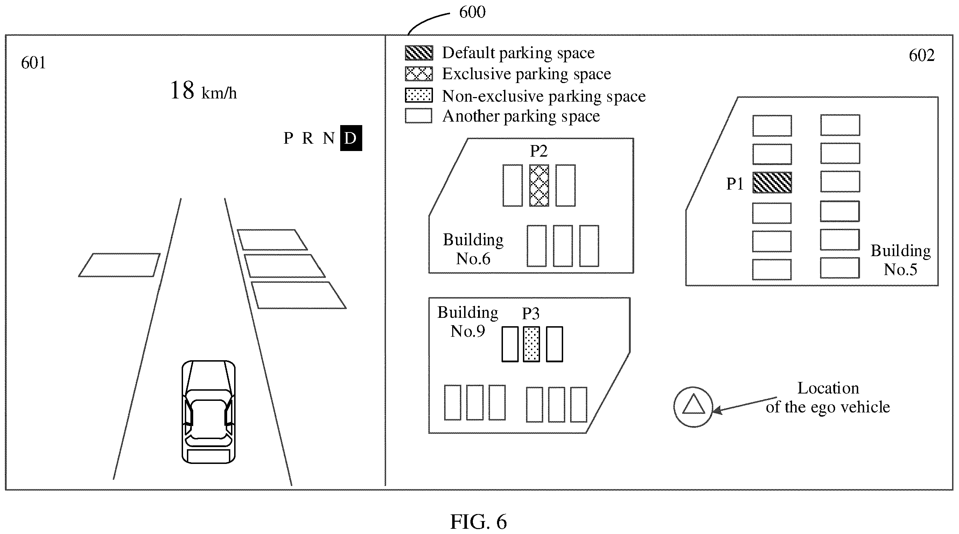

For example, FIG. 6 is a schematic diagram of another interaction interface for automated valet parking according to an embodiment of this application. When the automated valet parking system detects that the ego vehicle has entered the target area, an interaction interface 600 is displayed in the HMI. As shown in FIG. 6, the interaction interface 600 may include a display area 601 and a display area 602. For content displayed in the display area 601, refer to that in the display area 401 in FIG. 4. The distribution diagram of the parking space, the location of the ego vehicle, and other information may be displayed in the display area 602. The distribution diagram of the parking space may include a plurality of parking spaces, and the default parking space P1, the exclusive parking space P2, the non-exclusive parking space P3, and the another parking space are represented by using different patterns. The user may view the favorited parking space and/or the recommended parking space in the distribution diagram and a location of each parking space in the distribution diagram visually in the interaction interface 600. For example, the location information of each parking space, the distance between each parking space and the ego vehicle, and other information (not shown in the figure) may further be marked out near an icon of each parking space.

Further, the user may view the information about the parking space by using the list of parking spaces in the foregoing interaction interface (for example, the interaction interface 400 or the interaction interface 500) or a diagram of the parking space (for example, the interaction interface 600), and select a preferred parking space for parking to be the target parking space. In response to an operation of the user for selecting the target parking space, the automated valet parking system plans the parking route, and the parking route is displayed in the HMI.

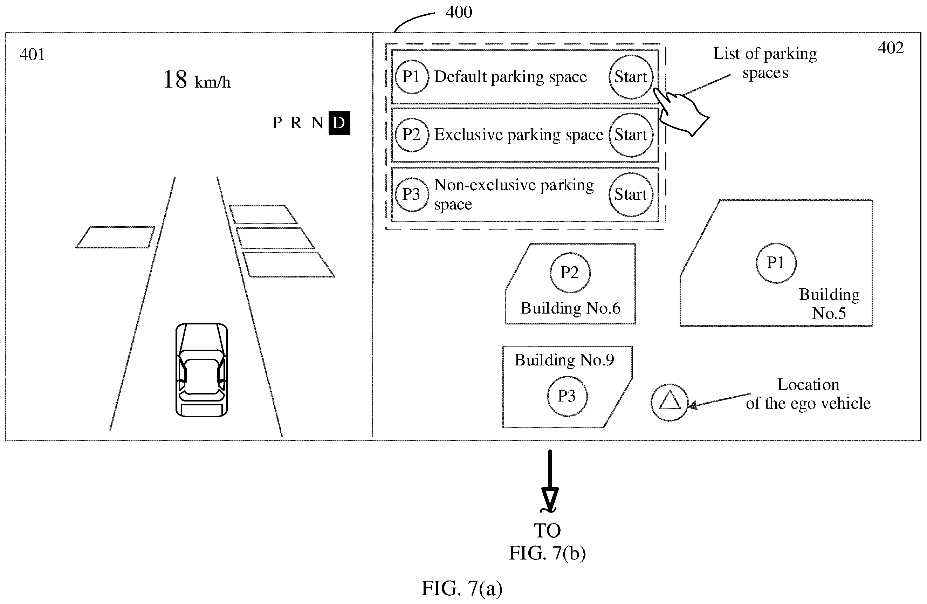

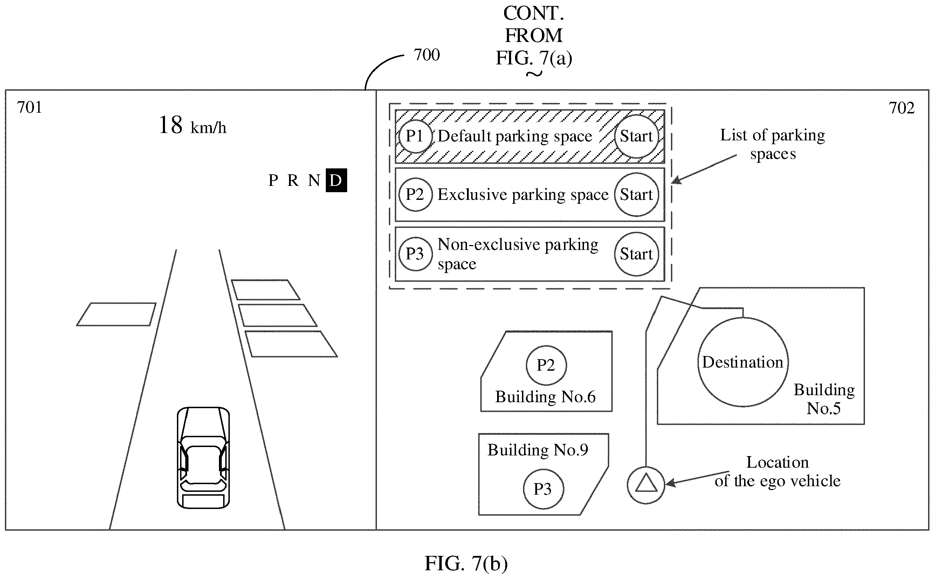

An example in which the user selects the target parking space from the list of parking spaces in the interaction interface 400 is used. FIG. 7(a) and FIG. 7(b) are a schematic diagram of another interaction interface for automated valet parking according to an embodiment of this application. FIG. 7(a) shows the interaction interface 400 in FIG. 4. The user taps an area corresponding to P1 in the list of parking spaces in the interaction interface 400 and selects P 1 to be the target parking space, and an interaction interface 700 is displayed in the HMI in response to the tapping operation of the user. As shown in FIG. 7(b), the interaction interface 700 may include a display area 701 and a display area 702. For content displayed in the display area 701, refer to that in the display area 401 in FIG. 4. An electronic map, a location of the ego vehicle, the list of parking spaces, a parking route, and other information may be displayed in the display area 702. In the list of parking spaces, the target parking space (that is, the parking space P1 in FIG. 7(b)) currently selected by the user is highlighted for display. The parking route is a route, planned by the automated valet parking system, from the location of the ego vehicle to the parking space P1. For example, the user may change the target parking space by tapping an area corresponding to P2 or P3 in the list of parking spaces. Correspondingly, a parking route (not shown in the figure) from the location of the ego vehicle to the parking space P2 or P3 is displayed in the display area 702. The user may autonomously select, with reference to each parking route, a parking space that best satisfies a requirement of the user to be the target parking space.

Further, after the user selects the target parking space, the automated valet parking system performs navigation based on the parking route, and displays a picture of navigation, and then the user may trigger the automated valet parking command, and the automated valet parking system controls the ego vehicle to automatically park in the target parking space when moving near the target parking space according to the navigation.

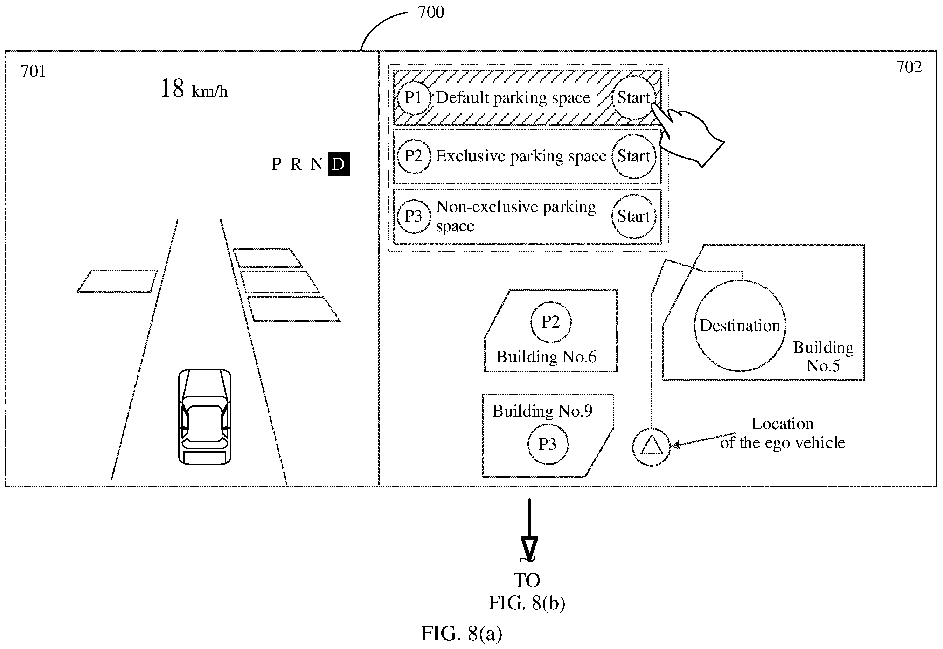

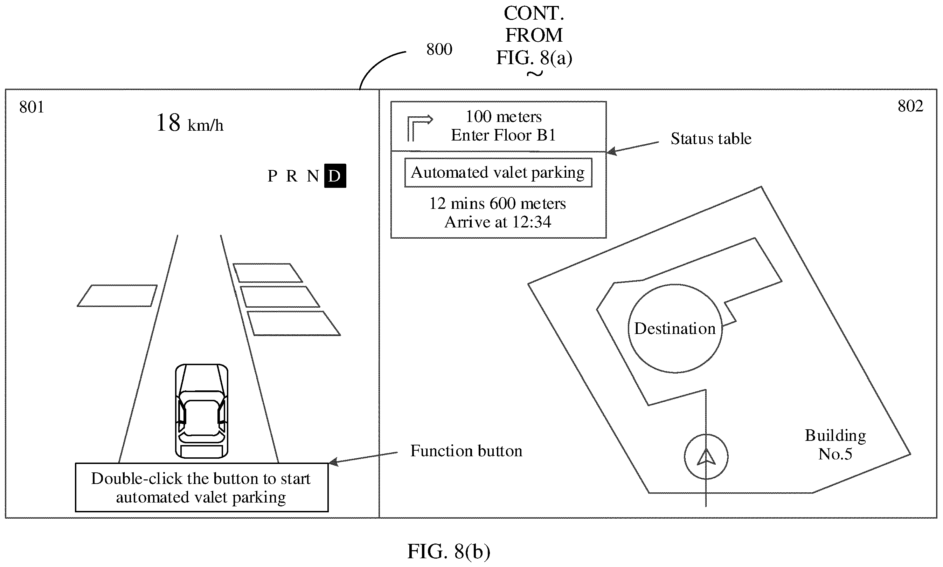

An example in which the user selects the parking space P1 in the interaction interface 700 to be the target parking space is used. FIG. 8(a) and FIG. 8(b) are a schematic diagram of another interaction interface for automated valet parking according to an embodiment of this application. FIG. 8(a) shows the interaction interface 700 in FIG. 7(b). The user taps a "Start" button in an area corresponding to the parking space P1 in the interaction interface 700, and an interaction interface 800 is displayed in the HMI in response to the tapping operation of the user. As shown in FIG. 8(b), the interaction interface 800 may include a display area 801 and a display area 802. In addition to the content displayed in the display area 701 in FIG. 7(b), a function button showing "Double-tap the button to start automated valet parking" is further displayed in the display area 801. The picture of navigation and a status table may be displayed in the display area 802. The status table may include an icon indicating a status of automated valet parking, a remaining navigation distance, remaining navigation time, estimated arrival time, and other information. The location of the ego vehicle, the location of the target parking space, an electronic map, and other information may be displayed in the picture of navigation.

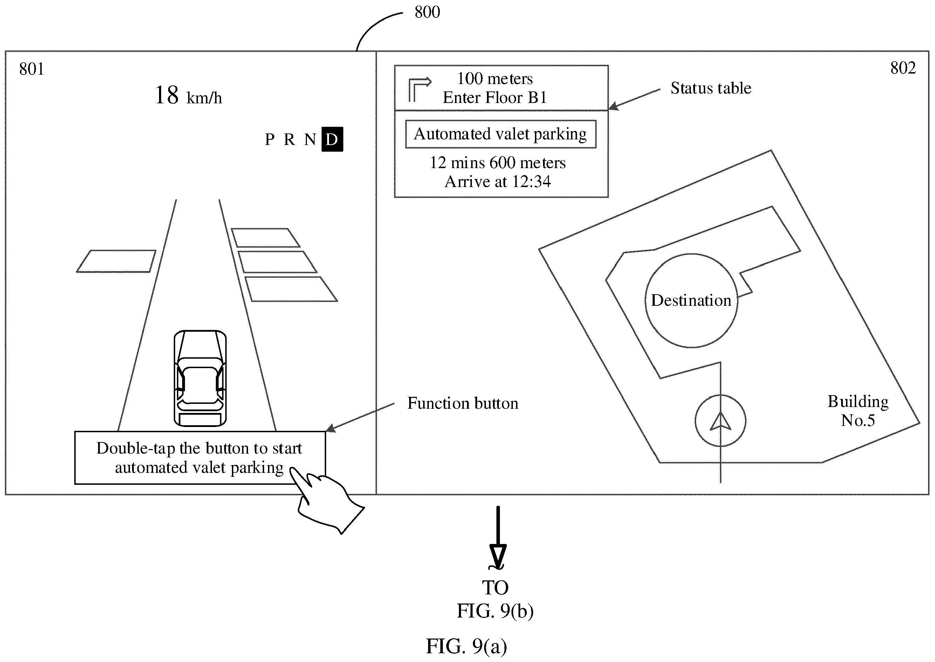

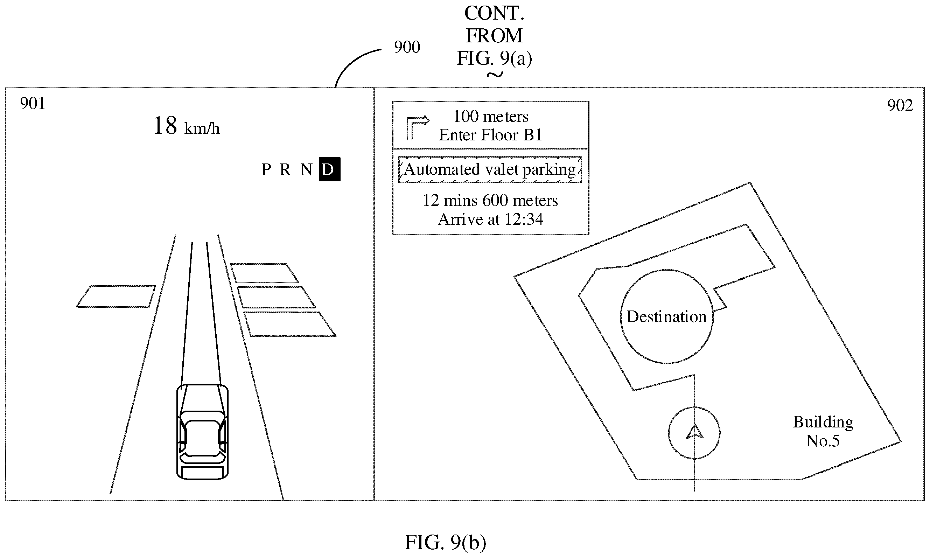

FIG. 9(a) and FIG. 9(b) are a schematic diagram of another interaction interface for automated valet parking according to an embodiment of this application. FIG. 9(a) shows the interaction interface 800 in FIG. 8(b). The user may double-tap the function button showing "Double-tap the button to start automated valet parking" in the interaction interface 800, and an interaction interface 900 is displayed in the HMI in response to the double-tapping operation of the user. As shown in FIG. 9(b), the interaction interface 900 may include a display area 901 and a display area 902. An interface for the cruising ego vehicle may be displayed in the display area 901. The picture of navigation may be displayed in the display area 902, and the icon indicating the status of automated valet parking in a status bar is highlighted to indicate that the ego vehicle is currently in an automated valet parking state. In this way, the user may autonomously trigger the automated valet parking command, and the automated valet parking system performs automated valet parking in response to the command. The user may view a related picture and information in the HMI during automated valet parking.

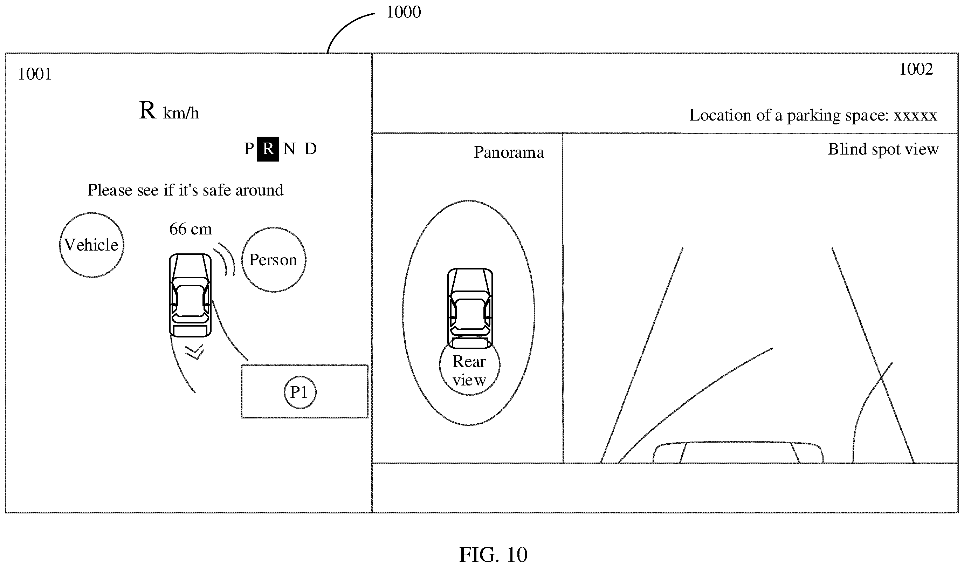

For example, when the ego vehicle automatically moves to a place near the target parking space and is ready to park in the target parking space, a real-time picture of parking may be displayed in the HMI. FIG. 10 is a schematic diagram of an interaction interface for displaying the real-time picture of parking according to an embodiment of this application. As shown in FIG. 10, an interaction interface 1000 may include a display area 1001 and a display area 1002. The gear of the ego vehicle, the surrounding environment of the ego vehicle, the identifier of the ego vehicle, prompt information (that is, "Please see if it's safe around" in FIG. 10), and other information may be displayed in the display area 1001. Pictures such as location information of a parking space, a panoramic view, and a blind spot view may be displayed in the display area 1002. The panoramic view and the blind spot view may be real-time pictures collected by using a camera or the like on the ego vehicle.

It can be understood that the interaction interfaces in embodiments of this application are merely examples. In actual application, different interaction interfaces or display areas may be obtained through division based on a requirement, and more or less information may be displayed in each of the interaction interfaces or display areas. For example, the interaction interface may further include an area for displaying in-vehicle environment information, for example, a temperature, an air conditioner, and a volume of sound.

In this way, after detecting that the ego vehicle has entered the target area, the automated valet parking system provides the information about the parking space (for example, the favorited parking spaces P1, P2, and P3) in the target area for the user by using the interaction interfaces shown in FIG. 4 to FIG. 10, so that the user can autonomously select the target parking space; and automatically plans the parking route in response to an operation of the user for selecting the target parking space and triggering automated valet parking, to implement automated valet parking. The user may monitor a parking process by using the interaction interfaces shown in FIG. 4 to FIG. 10. This improves security and control of the user, and improves user experience.

A process in which the user favorites a parking space is described below in detail.

For example, the user may perform an operation of favoriting a parking space based on a preference of the user in the following two scenarios.

In a scenario 1, the user may perform the operation of favoriting a parking space after the ego vehicle has been parked in a parking space.

In a possible implementation, when it is detected that the ego vehicle has been parked in the target parking space, whether the target parking space is the favorited parking space is determined; and if the target parking space is a non-favorited parking space, prompt information about whether to favorite the target parking space is sent to the user.

For example, the automated valet parking system may detect, based on the perceived data on the surrounding environment of the ego vehicle, whether the ego vehicle has been parked in the target parking space, and when it is detected that the ego vehicle is completely within the target parking space and that the ego vehicle is in a gear for parking (P-gear), it may be determined that the ego vehicle has been parked in the target parking space. Further, the automated valet parking system may search a list of favorited parking spaces for the target parking space. If the target parking space is not found, it indicates that the target parking space is a non-favorited parking space. In this case, the automated valet parking system may prompt, by using at least one of a text, voice, a color, icon blinking, vibration, or the like, the user whether to set the target parking space as the favorited parking space. In this way, a function of favoriting a parking space is provided for the user while safety is ensured, improving user experience.

In a possible implementation, an editing page is displayed in response to an operation of the user for confirming to favorite the target parking space; and the target parking space is marked as the favorited parking space in response to an operation of the user for editing a parking space type and/or a parking space name, where the parking space type may include any one of default, exclusive, and non-exclusive.

If the user wants to favorite the parking space in which the ego vehicle is parked, the operation of the user for confirming to favorite the target parking space may be performed by tapping, voice, a gesture, using a physical button, or the like, to trigger a command for favoriting the parking space. For example, the user may trigger the command for favoriting the parking space by tapping a virtual button in the interaction interface for favoriting the parking space; may trigger the command for favoriting the parking space by using a physical button on the ego vehicle; may favorite the parking space by using a voice command; or may trigger the command for favoriting the parking space by a specific gesture.

After receiving the command for favoriting the parking space triggered by the user, the automated valet parking system displays the editing page, so that the user can set the parking space type, the parking space name, and other information in an individualized manner. For example, if the target parking space is the private parking space, the user may set the target parking space as the default parking space, or may set the target parking space as the exclusive parking space. If the target parking space is the public parking space, near an exit, that is preferred by the user, the target parking space may be set as the non-exclusive parking space, or may be set as the default parking space.

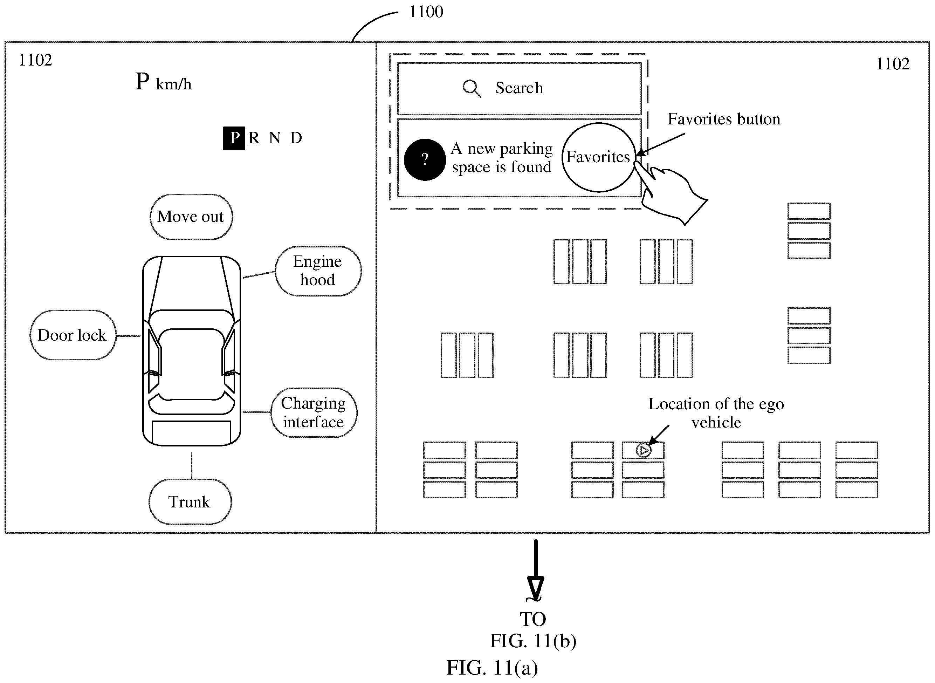

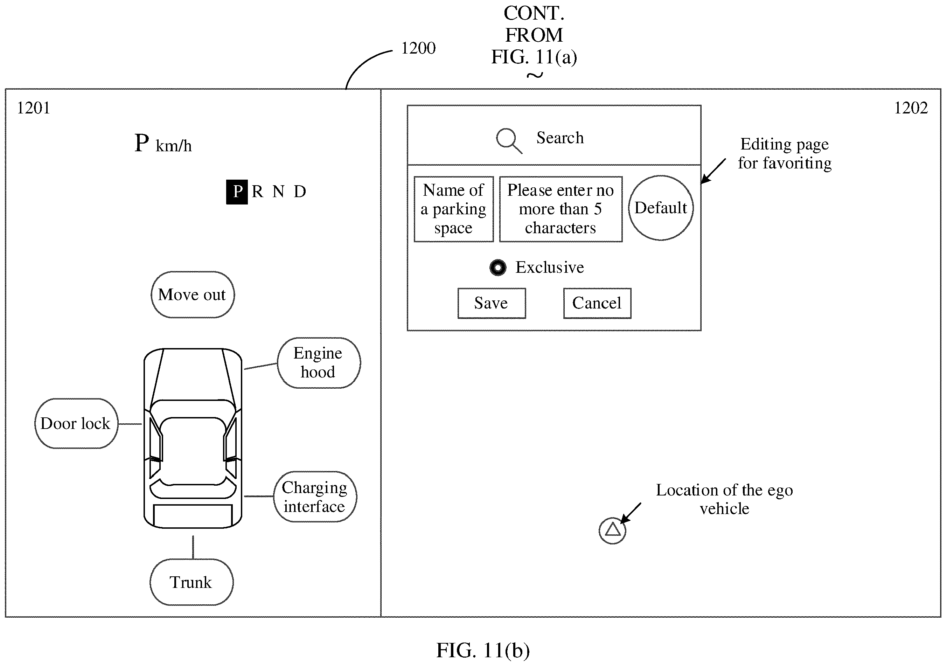

For example, FIG. 11(a) and FIG. 11(b) are a schematic diagram of an interaction interface for favoriting a parking space according to an embodiment of this application. As shown in FIG. 11(a), an interaction interface 1100 may include a display area 1101 and a display area 1102. The gear of the ego vehicle and structural information of the ego vehicle (for example, a door lock, an engine hood, a charging interface, a trunk, and another marking sign) may be displayed in the display area 1101. The location of the ego vehicle, an electronic map, prompt information for favoriting, a favorites button, and the like may be displayed in the display area 1102. When the automated valet parking system detects that the ego vehicle has been parked in a parking space and determines that the current parking space is a non-favorited parking space, prompt information showing "A new parking space is found" may be displayed in the display area 1102. If the user wants to favorite the parking space, the user may tap a "Favorite" button, and an interaction interface 1200 is displayed in the HMI in response to the tapping operation of the user. As shown in FIG. 11(b), the interaction interface 1200 may include a display area 1201 and a display area 1202. The display area 1201 is the same as the display area 1101 in FIG. 11(a). The editing page for favoriting, the location of the ego vehicle, and other information may be displayed in the display area 1202. In the editing page for favoriting, the user may input a parking space name, and may further edit a parking space type. For example, the user may tap a "Default" button and may set the parking space as the default parking space, may tap an "Exclusive" button and set the parking space as the exclusive parking space, or may set the parking space as the non-exclusive parking space if the "Default" and "Exclusive" buttons are not tapped. After setting is completed, the user may tap a "Save" button, to mark the parking space as the favorited parking space and save information edited by the user into the automated valet parking system.

In a scenario 2, the user may perform the operation of favoriting a parking space when the target parking space is selected.

In a possible implementation, in response to an operation of the user for selecting the target parking space from the parking space in the target area, whether the target parking space is the favorited parking space is determined; and if the target parking space is a non-favorited parking space, the prompt information about whether to favorite the target parking space is sent to the user.

For example, the ego vehicle may be in an autonomous driving state. After receiving a command of the user for selecting the target parking space, the automated valet parking system may search the list of favorited parking spaces for the target parking space, where if the target parking space is not found, it indicates that the target parking space is a non-favorited parking space; and in this case, prompts the user whether to set the target parking space as the favorited parking space. For a manner of prompting, refer to the foregoing related descriptions. In this way, a function of favoriting a parking space is provided for the user, improving user experience.

For example, an editing page is displayed in response to an operation of the user for confirming to favorite the target parking space; and the target parking space is marked as the favorited parking space in response to an operation of the user for editing a parking space type and/or a parking space name. For a specific implementation, refer to the foregoing related descriptions. Details are not described herein again.

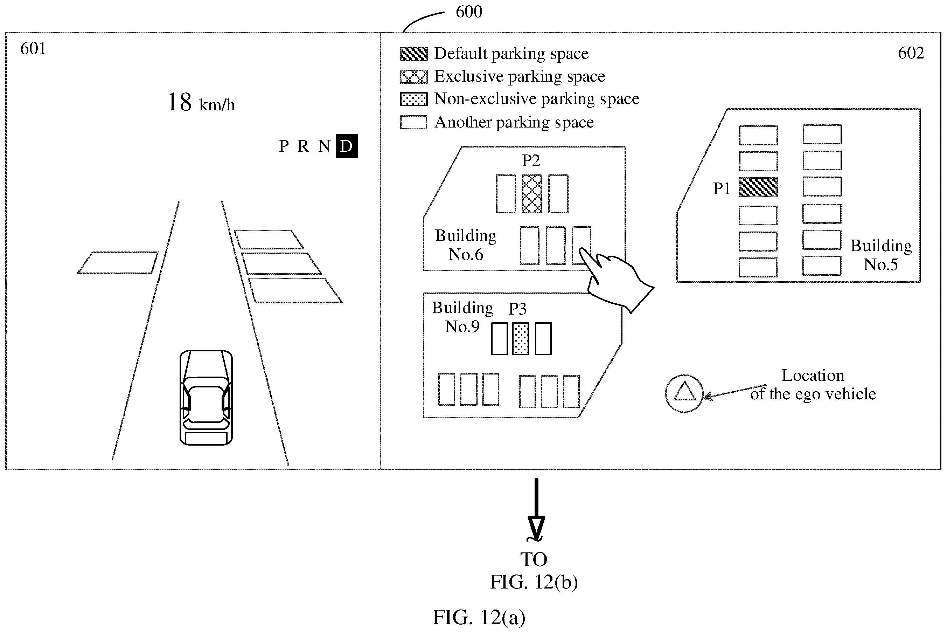

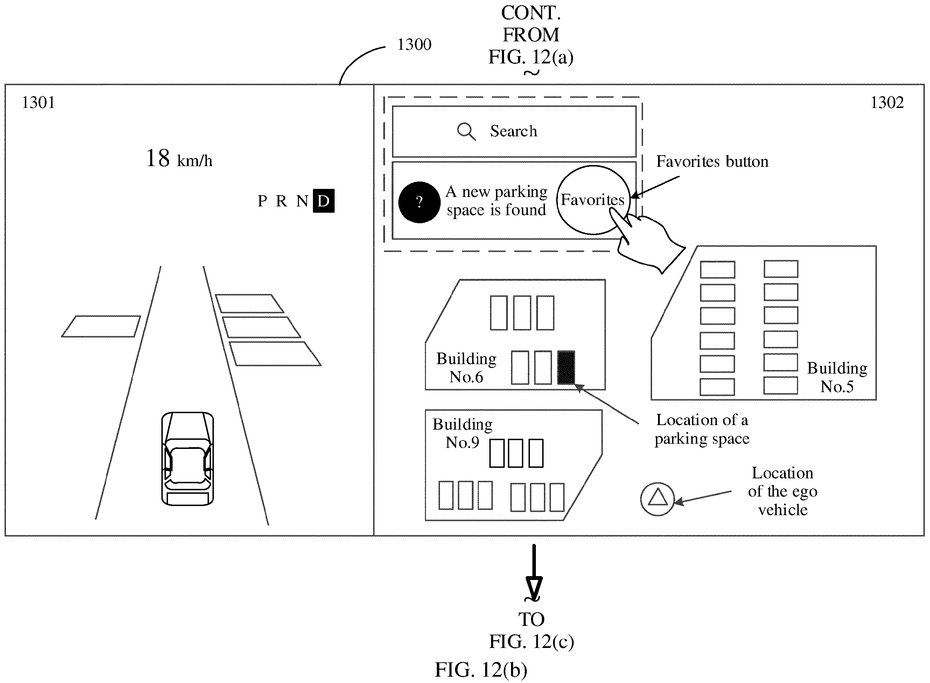

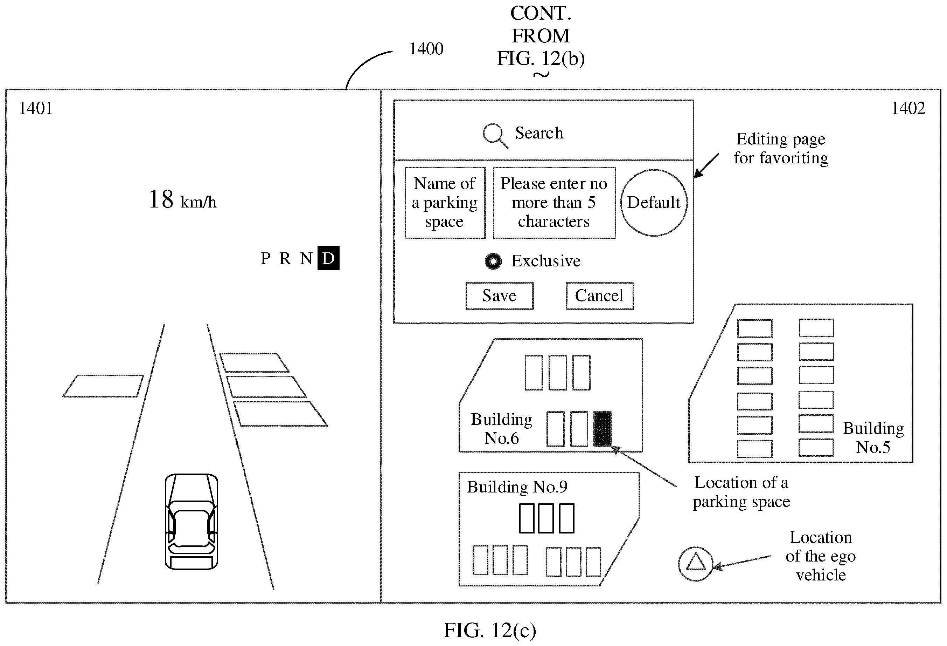

For example, FIG. 12(a) to FIG. 12(c) are a schematic diagram of another interaction interface for favoriting a parking space according to an embodiment of this application. FIG. 12(a) shows the foregoing interaction interface 600. The user taps the distribution diagram to select an icon corresponding to a parking space. In response to the tapping operation of the user, the automated valet parking system determines that the parking space is a non-favorited parking space, and an interaction interface 1300 is displayed in the HMI. As shown in FIG. 12(b), the interaction interface 1300 may include a display area 1301 and a display area 1302. The display area 1301 is the same as the display area 601 in the interaction interface 600. The location of the ego vehicle, a location of the parking space, the distribution diagram of the parking space, the prompt information showing "A new parking space is found", and the like may be displayed in the display area 1302. If the user wants to favorite the parking space, the user may tap the "Favorite" button. An interaction interface 1400 is displayed in the HMI in response to an operation of the user for tapping the "Favorite" button. As shown in FIG. 12(c), the interaction interface 1400 may include a display area 1401 and a display area 1402. The display area 1401 is the same as the display area 601 in the interaction interface 600. The editing page for favoriting, the location of the ego vehicle, the location of the parking space, the distribution diagram of the parking space, and the like may be displayed in the display area 1402. For content included in the editing page for favoriting and an editing process, refer to the foregoing related descriptions of the display area 1202. Details are not described herein again.

In this way, the user may perform the operation of favoriting a parking space by using the interaction interface shown in FIG. 11(a) and FIG. 11(b) if the ego vehicle has been parked in the parking space or by using the interaction interface shown in FIG. 12(a) to FIG. 12(c) when the user selects the target parking space; and edit a name of the favorited parking space, information about whether the parking space is default, information about whether the parking space is exclusive, and other information, to favorite the parking space in an individualized manner.

Further, considering that the target parking space may be occupied by another vehicle, when the target parking space is occupied, different processing strategies may be used based on a type of the target parking space.

For example, when the ego vehicle automatically moves to a place near the target parking space on the parking route, the automated valet parking system may detect, based on the perceived data on the surrounding environment of the ego vehicle, whether the target parking space is occupied.

In a possible implementation, when it is detected that the target parking space is occupied, a vacant parking space is searched for; and if the vacant parking space is found, the ego vehicle is automatically parked in the vacant parking space and location information of the vacant parking space is sent to the user; and if the vacant parking space is not found, prompt information about taking over the vehicle is sent to the user.

For example, the target parking space may be the recommended parking space or the non-exclusive parking space. The recommended parking space or the non-exclusive parking space is usually a public parking space and is relatively highly possible to be occupied by another vehicle. Therefore, for the recommended parking space or the non-exclusive parking space, an area parking strategy may be used. To be specific, when the recommended parking space or the non-exclusive parking space is occupied, the ego vehicle automatically roves for parking without a decision made by the user. This saves energy and time for the user and improves user experience.

For example, after detecting that the target parking space is occupied, the automated valet parking system may control the ego vehicle to enter an area roving state, that is, control the ego vehicle to rove in a specific area near the target parking space, and in a roving process, search for a vacant parking space in the area based on the perceived data on the surrounding environment of the ego vehicle. If the vacant parking space is found, the automated valet parking system controls the ego vehicle to automatically park in the vacant parking space, and notifies the user of location information of the vacant parking space after parking is completed. If no vacant parking space is found in the roving process, the automated valet parking system prompts the user to take over the vehicle. For a manner of prompting, refer to the foregoing related descriptions.

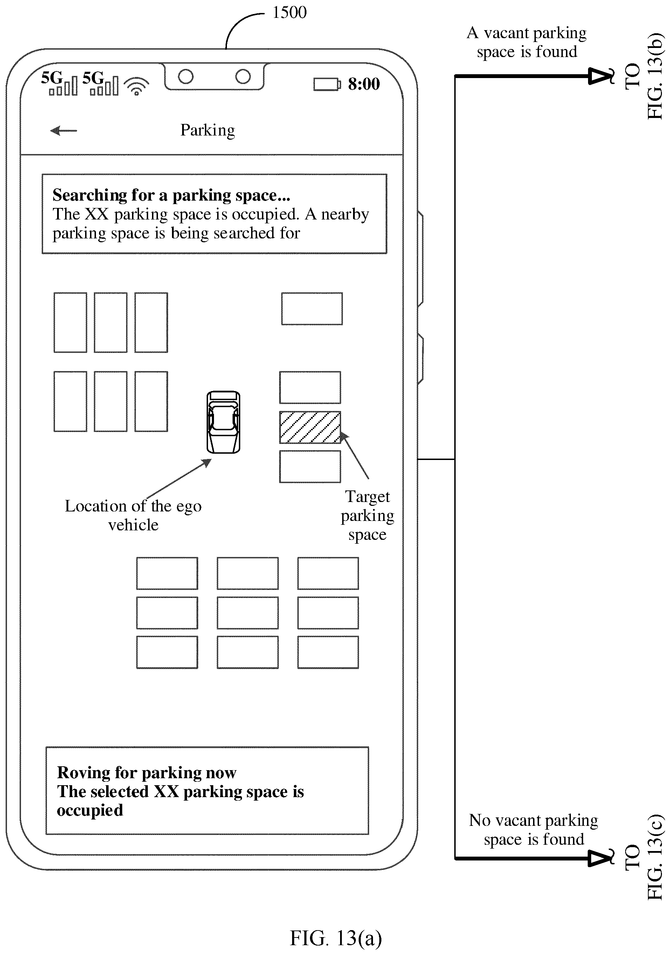

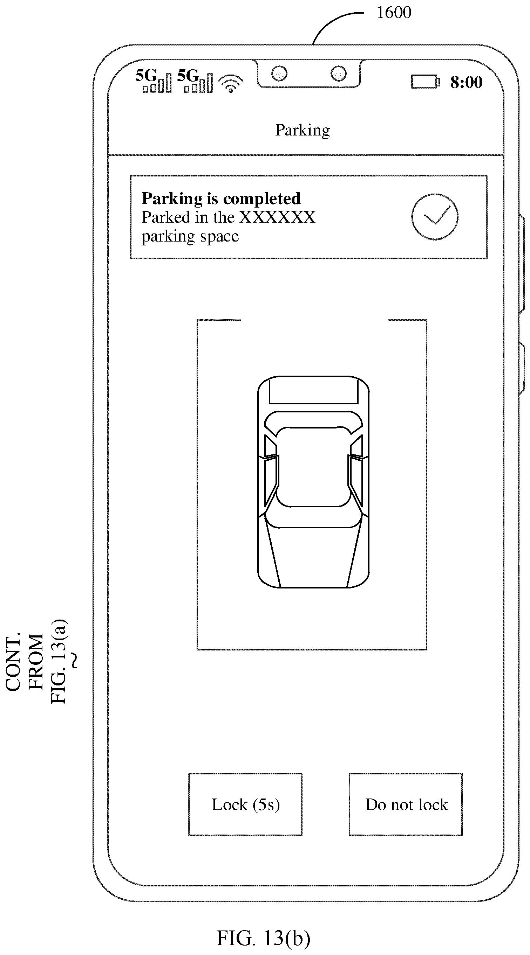

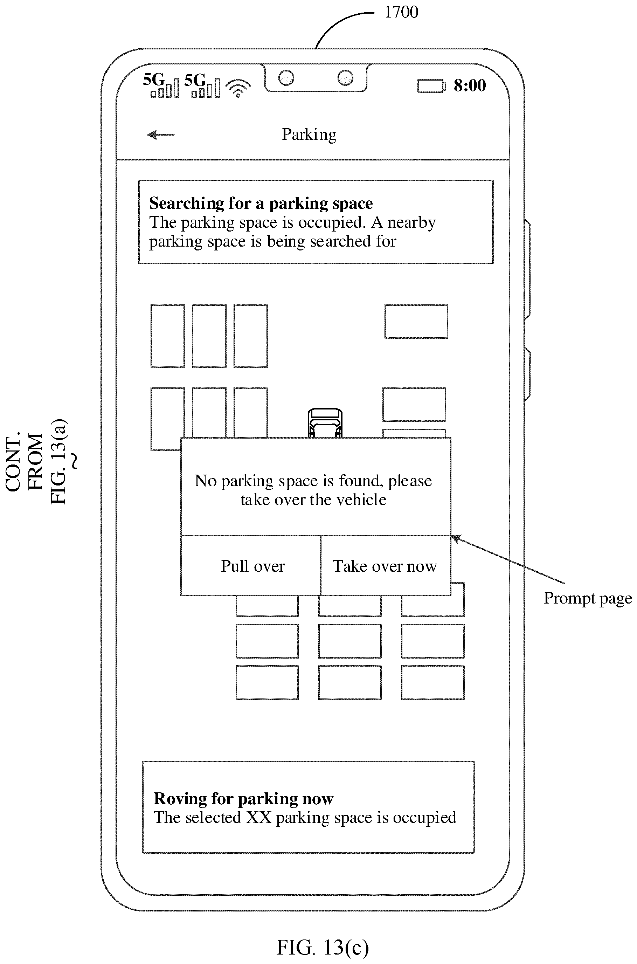

For example, the user is not in the cockpit, and a parking process is monitored by using a mobile terminal. FIG. 13(a) to FIG. 13(c) are a schematic diagram of another interaction interface for automated valet parking according to an embodiment of this application. An automated valet parking system detects that the target parking space is occupied, and automatically performs roving for parking. The mobile terminal displays an interaction interface 1500. As shown in FIG. 13(a), the location of the ego vehicle, the electronic map, a location of the target parking space, and information about a current status of the ego vehicle (for example, "Searching for a parking space..." in the figure) may be displayed in the interaction interface 1500. If a vacant parking space is found, the automated valet parking system controls the ego vehicle to automatically park in the vacant parking space, and displays an interaction interface 1600 on the mobile terminal. As shown in FIG. 13(b), information about a status of the ego vehicle (for example, "Parking is completed" in the figure), location information of a current parking space of the ego vehicle, and prompt information about whether to lock the vehicle may be displayed in the interaction interface 1600. If no vacant parking space is found, the automated valet parking system controls the ego vehicle to rove for parking, and displays an interaction interface 1700 on the mobile terminal. As shown in FIG. 13(c), a prompt page that may display prompt information "No parking space is found, please take over the vehicle", a function button for pulling over, and a function button for taking over the vehicle may be displayed in the interaction interface 1700. The user may tap the function button to trigger a corresponding function.

In a possible implementation, when it is detected that the target parking space is occupied, the prompt information about taking over the vehicle is sent to the user.

For example, the target parking space may be the default parking space or the exclusive parking space. The default parking space and the exclusive parking space are usually private parking spaces for the user and are usually not occupied. For the default parking space or the exclusive parking space, a precise parking strategy may be used. To be specific, when the default parking space or the exclusive parking space is occupied, and the user can make a decision autonomously. This improves autonomy of parking and a sense of being in command of the user and improves user experience.

For example, after detecting that the target parking space is occupied, the automated valet parking system may control the ego vehicle to stop at a current location or start to rove, and prompt the user to take over the vehicle. For a manner of prompting, refer to the foregoing related descriptions. If the user triggers a command for roving for parking, the ego vehicle is controlled to rove for parking. For a process of roving for parking, refer to the foregoing related descriptions. Details are not described herein again.

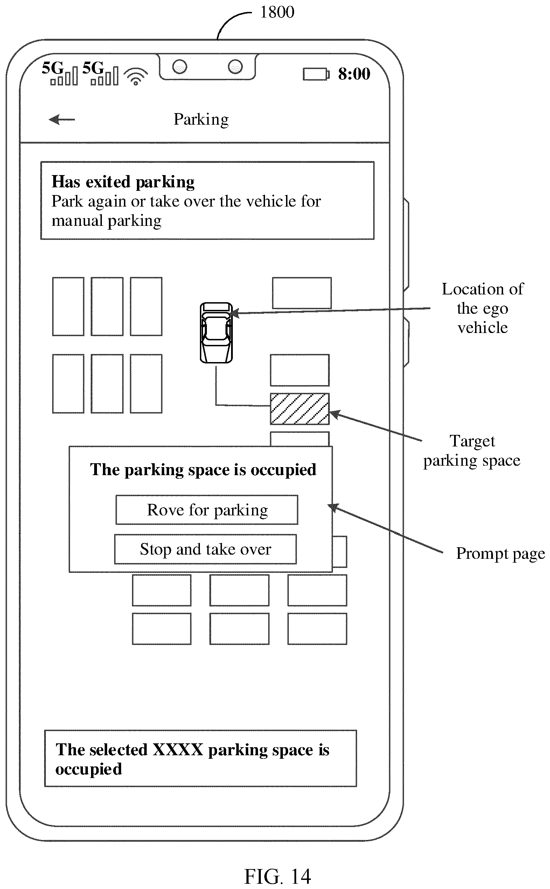

FIG. 14 is a schematic diagram of another interaction interface for automated valet parking according to an embodiment of this application. The automated valet parking system detects that the target parking space is occupied, and the automated valet parking system suspends an original parking process. An interaction interface 1800 is displayed on the mobile terminal. As shown in FIG. 14, the location of the ego vehicle, the electronic map, the location of the target parking space, and information about a current status of the ego vehicle (for example, "Has exited parking" in the figure) may be displayed in the interaction interface 1800; and a prompt page that may display prompt information "The parking space is occupied", the function button for roving for parking, and the function button for taking over the vehicle may be further displayed. The user may tap the function button to trigger a corresponding function.

In a possible implementation, the automated valet parking system may obtain information about the vacant parking space in the target area; and determine an optimal vacant parking space in the vacant parking space when it is detected that the target parking space is occupied, and control the ego vehicle to park in the optimal vacant parking space.

For example, the automated valet parking system may obtain the information about the vacant parking space in the target area from a server in the target area or a cloud device. Alternatively, the automated valet parking system may obtain the information about the vacant parking space in the target area based on the perceived data on the surrounding environment of the ego vehicle. The information about the vacant parking space may include a name, a serial number, a location, a form, a size, and other information of the vacant parking space.

For example, when detecting that the target parking space is occupied, the automated valet parking system may determine, based on a parking habit or the like of the user, that a vacant parking space that satisfies the parking habit of the user is the optimal vacant parking space. For example, if the user is used to select a vertical parking space, the vertical vacant parking space may be selected to be the optimal vacant parking space based on the form of the vacant parking space. For another example, it may be determined, based on location information of the vacant parking space and location information of the target parking space, that a vacant parking space closest to the target parking space is the optimal vacant parking space; or it may be determined, based on the location information of the vacant parking space and location information of an entrance of an elevator or an exit, that a vacant parking space closest to the entrance of the elevator or the exit is the optimal vacant parking space. After the optimal vacant parking space is determined, the automated valet parking system controls the ego vehicle to park in the optimal vacant parking space.

Further, when it is detected that the ego vehicle has been parked in the optimal vacant parking space, the automated valet parking system may determine whether the optimal vacant parking space is the favorited parking space. If the optimal vacant parking space is the non-favorited parking space, prompt information about whether to set the optimal vacant parking space as the favorited parking space may be sent to the user. For a detailed process of favoriting the parking space, refer to the foregoing descriptions. Details are not described herein again.

Further, after the ego vehicle has been parked in the target parking space, when the user needs to drive the ego vehicle, the ego vehicle may be controlled, by triggering an automatic summon function, to automatically move to a location, specified by the user, for entering the vehicle. For a principle and process of implementing the automatic summon function, refer to the foregoing related descriptions of automated valet parking.

An automated valet parking method according to an embodiment of this application is described below by using an example in which a user selects a target parking space when setting a navigation destination.

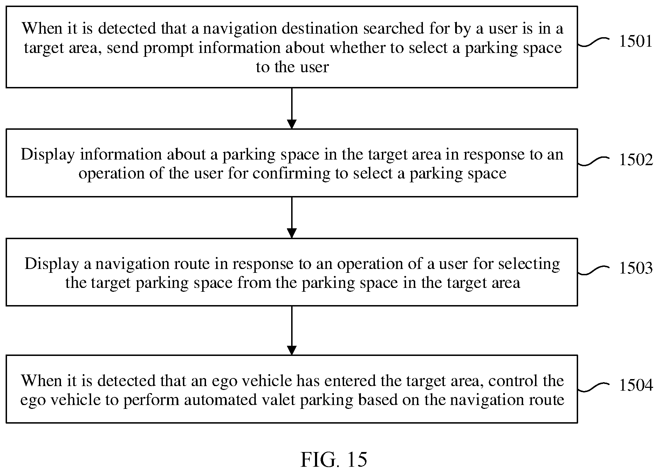

FIG. 15 is a flowchart of another automated valet parking method according to an embodiment of this application. The method may be performed by the ego vehicle 101 in FIG. 1, the automated valet parking system 200 in FIG. 2, or a module inside the automated valet parking system 200. As shown in FIG. 15, the method may include the following steps.

Step 1501: When it is detected that a navigation destination searched for by a user is in a target area, send prompt information about whether to select a parking space to the user.

For detailed descriptions of the target area, refer to the foregoing descriptions. Details are not described herein again.

For example, the automated valet parking system may obtain, based on an electronic map, location information of the target area and location information of the navigation destination that is input by the user manually, by voice, or in another manner. The automated valet parking system may detect, based on the location information of the navigation destination searched for by the user and the location information of the target area, whether the navigation destination searched for by the user is in the target area. For example, the automated valet parking system may pre-store the electronic map of the target area, or may obtain the electronic map of the target area from a cloud device.

For example, the electronic map of the target area may further include information about a parking space in the target area. Considering that the user has a parking requirement after the ego vehicle has entered the target area, when detecting that the navigation destination searched for by the user is in the target area, the automated valet parking system prompts the user whether to select a parking space, so that the user may directly select a preferred parking space for parking to be the navigation destination.

For example, the automated valet parking system may prompt, by using at least one of a text, voice, a color, icon blinking, vibration, or the like, the user whether to select a parking space.

Step 1502: Display the information about the parking space in the target area in response to an operation of the user for confirming to select a parking space. For example, the parking space in the target area may include a favorited parking space and/or a recommended parking space. The favorited parking space includes at least one of a default parking space, an exclusive parking space, or a non-exclusive parking space.

For example, the user may trigger a command for selecting a parking space by tapping, voice, a gesture, using a physical button, or the like. After receiving the command, the automated valet parking system may display the information about the parking space in the target area.

For detailed descriptions of the parking space in the target area, the information about the parking space in the target area, the favorited parking space, the recommended parking space, the default parking space, the exclusive parking space, or the non-exclusive parking space, refer to the foregoing descriptions. Details are not described herein again.

Step 1503: Display a navigation route in response to an operation of the user for selecting a target parking space from the parking space in the target area, where the navigation route includes a route from a location of an ego vehicle to the target parking space.

For a possible implementation of this step, refer to related descriptions of step 302 in FIG. 3. Details are not described herein again.

Step 1504: When it is detected that the ego vehicle has entered the target area, control the ego vehicle to perform automated valet parking based on the navigation route.

For a detailed process of detecting whether the ego vehicle has entered the target area in this step, refer to related descriptions of step 301 in FIG. 3. For a detailed process of controlling the ego vehicle to perform automated valet parking based on the navigation route, refer to related descriptions of step 303 in FIG. 3. Details are not described herein again.

For example, the automated valet parking system may obtain location information of the ego vehicle; and detect, based on the location information of the ego vehicle and location information of a boundary of the target area, whether the ego vehicle has entered the target area.

For example, when the ego vehicle enters the target area, the ego vehicle may be in a plurality of driving states. For example, the ego vehicle may enter the target area based on the navigation route in a manual driving state, or may enter the target area based on the navigation route in an autonomous driving mode. For example, when detecting that the ego vehicle has entered the target area based on the navigation route in the manual driving state, the automated valet parking system may send prompt information about whether to start automated valet parking to the user, and control, in response to a command sent by the user for automated valet parking, the ego vehicle to continue to perform automated valet parking based on the navigation route.

For example, when detecting that the ego vehicle has entered the target area based on the navigation route in an autonomous driving mode, the automated valet parking system may automatically activate an automated valet parking function, to control the ego vehicle to continue to perform automated valet parking based on the navigation route.

In this embodiment of this application, when it is detected that the navigation destination searched for by the user is in the target area, the prompt information about whether to select a parking space is sent to the user; and the information about the parking space in the target area is displayed in response to the operation of the user for confirming to select a parking space, so that the user can autonomously select the target parking space. In some examples, the parking space in the target area may include the favorited parking space and/or the recommended parking space. The user may conveniently and quickly select, based on information about a plurality of types of parking spaces in the target area, the preferred target parking space for parking, to satisfy a requirement of the user. The navigation route is displayed in response to the operation of the user for selecting the target parking space from the parking space in the target area; and when it is detected that the ego vehicle has entered the target area, the user does not need to reselect the target parking space or plan a route again, and automated valet parking may be directly performed based on the navigation route. This is convenient and convenient, improves user experience, reduces a hardware requirement on the target area, and has a wide application scope. In addition, the user does not need to drive the ego vehicle to a specific location in the target area, and the user may not exit the vehicle, forming smooth transition from a current driving status of the ego vehicle to a parking process. This improves flexibility of parking for the user. In addition, the user may monitor the parking process. This improves security and control of the user, and improves user experience.

An interaction process in the automated valet parking method according to this embodiment of this application is further described below by using an example in which an interaction function related to automated valet parking is implemented by using an HMI on the ego vehicle.

In a possible implementation, that the information about the parking space in the target area is displayed may include: A distribution diagram of the parking space in the target area is displayed, where parking spaces corresponding to different priorities are represented by different icons. Priorities of the default parking space, the exclusive parking space, and the non-exclusive parking space decrease successively. For detailed descriptions of this implementation, refer to the foregoing related descriptions. Details are not described herein again.

In a possible implementation, that the information about the parking space in the target area is displayed may include: A list of parking spaces in the target area is displayed, where the parking space in the list is sequentially sorted based on a corresponding priority. For detailed descriptions of this implementation, refer to the foregoing related descriptions. Details are not described herein again.

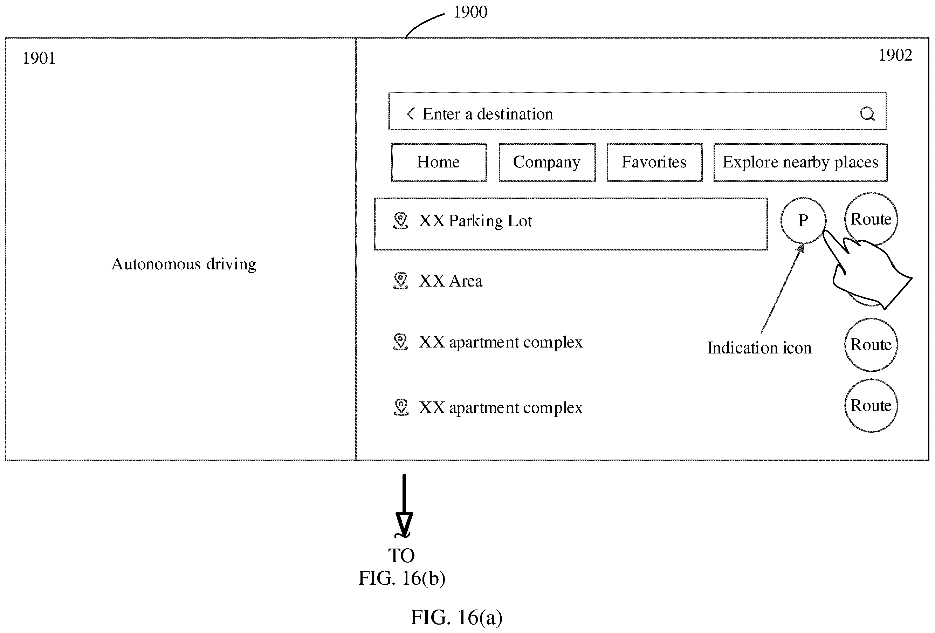

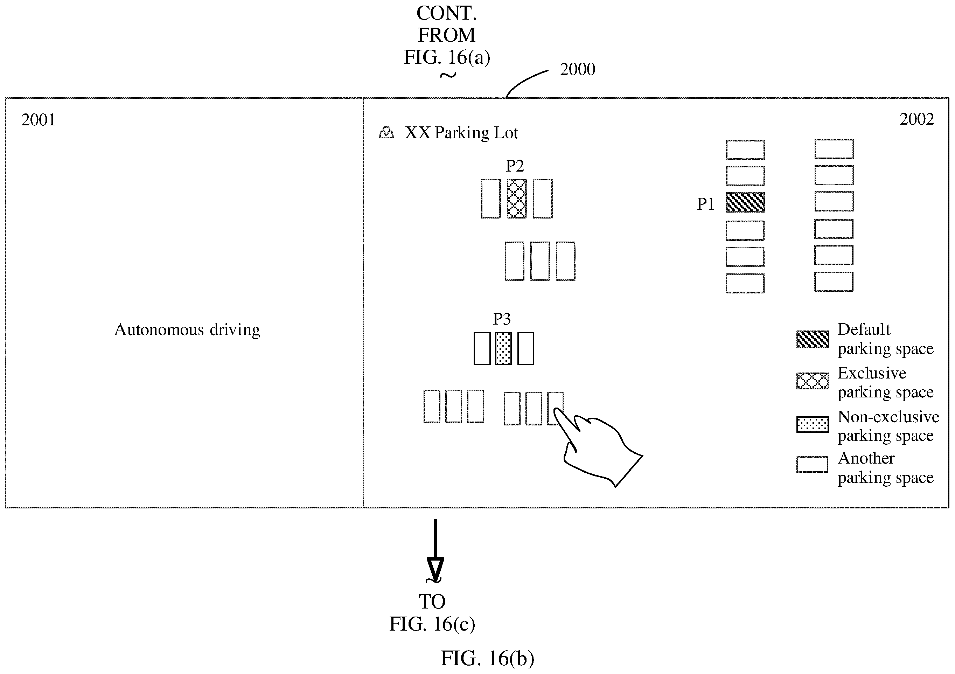

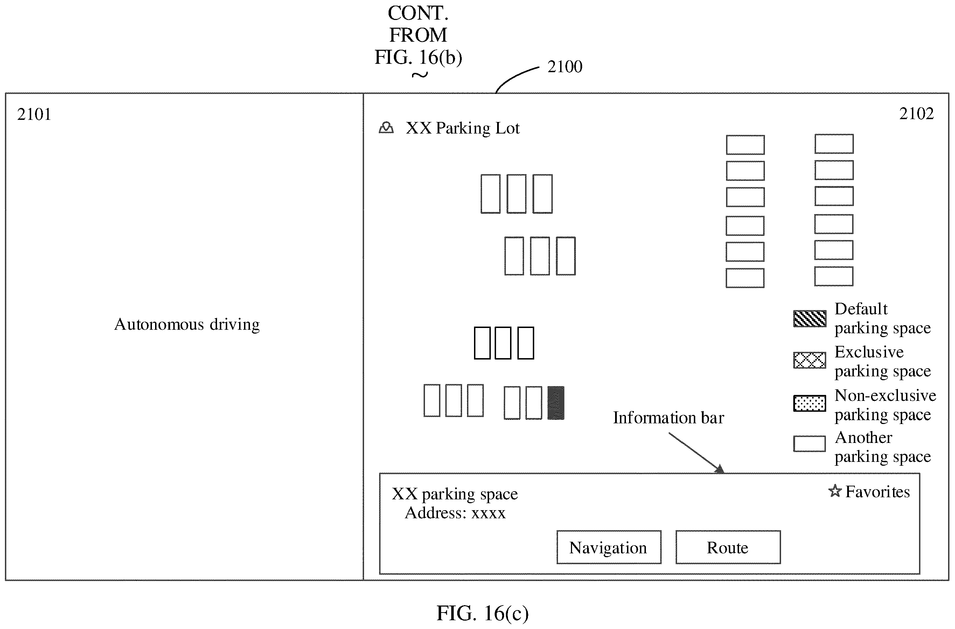

For example, FIG. 16(a) to FIG. 16(c) are a schematic diagram of another interaction interface for automated valet parking according to an embodiment of this application. When the user sets the navigation destination, an interaction interface 1900 is displayed in the HMI. As shown in FIG. 16(a), the interaction interface 1900 may include a display area 1901 and a display area 1902. An autonomous driving icon may be displayed in the display area 1901. A box for inputting the navigation destination and an address information bar may be displayed in the display area 1902. The user may input the navigation destination in the input box. When detecting that the navigation destination input by the user is in the target area, the automated valet parking system displays an indication icon "P" in the target area address information bar, to indicate that automated valet parking can be performed in the target area. In response to an operation of the user for tapping the indication icon "P", an interaction interface 2000 is displayed in the HMI. As shown in FIG. 16(b), the interaction interface 2000 may include a display area 2001 and a display area 2002. The autonomous driving icon may be displayed in the display area 2001. A distribution diagram of the parking space in the target area may be displayed in the display area 2002. A default parking space P1, an exclusive parking space P2, non-exclusive parking space P3, and another parking space are represented by using different patterns. The user may tap an icon corresponding to a parking space in the distribution diagram, to select any one of P1, P2, P3, or the another parking space to be the navigation destination. After receiving the operation of the user for selecting the navigation destination from the parking space in the target area, the automated valet parking system may plan the navigation route based on the location information of the ego vehicle and the location information of the navigation destination, and an interaction interface 2100 is displayed in the HMI. As shown in FIG. 16(c), the interaction interface 2100 may include a display area 2101 and a display area 2102. The autonomous driving icon may be displayed in the display area 2101. The distribution diagram of the parking space in the target area and an information bar may be displayed in the display area 2102. The information bar includes information about (for example, a name and a location of) a currently selected parking space, and further includes a navigation function button and a route function button. The user may view the navigation route by tapping the route function button, or the user may view a navigation interface by tapping the navigation function button.

Further, the ego vehicle may move based on the navigation route and enter the target area.

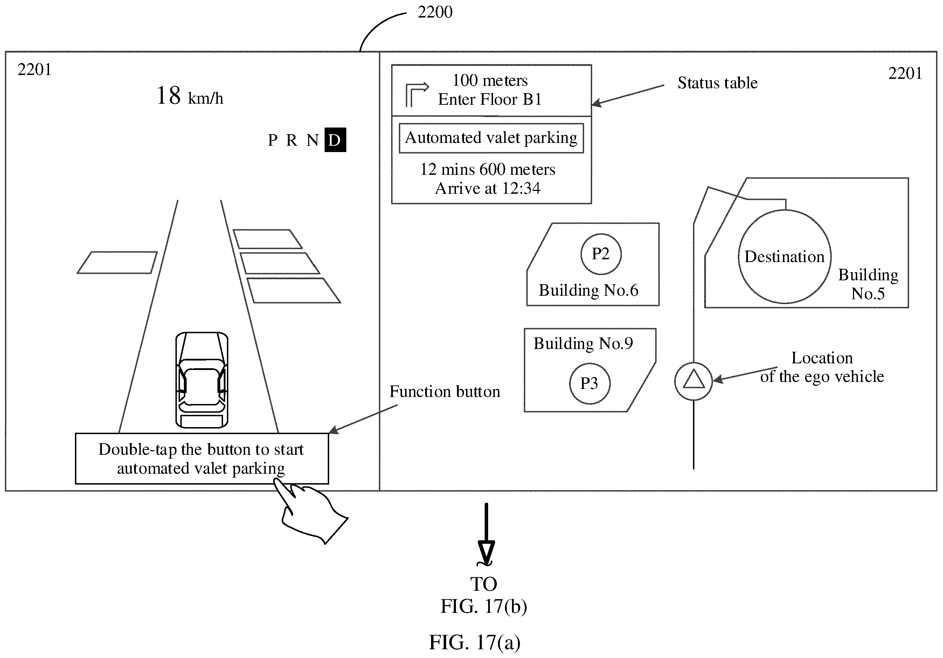

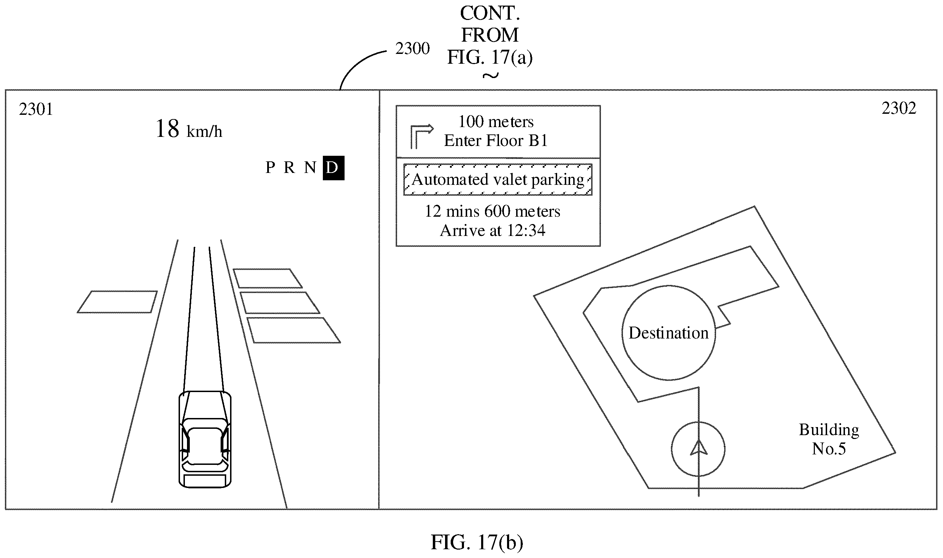

FIG. 17(a) and FIG. 17(b) are a schematic diagram of another interaction interface for automated valet parking according to an embodiment of this application. The ego vehicle may enter the target area on the foregoing navigation route in the manual driving state. When the automated valet parking system detects that the ego vehicle has entered the target area, an interaction interface 2200 is displayed in the HMI. As shown in FIG. 17(a), for content displayed in the interaction interface 2200, refer to the interaction interface 800 in FIG. 8(b). The user may double-tap a function button "Double-tap the button to start automated valet parking" in the interaction interface 2200. In response to the double-tapping operation of the user, the automated valet parking system controls the ego vehicle to keep moving based on the navigation route, and an interaction interface 2300 is displayed in the HMI. As shown in FIG. 17(b), for content displayed in the interaction interface 2300, refer to the interaction interface 900 in FIG. 9(b). The user may view, in the interaction interface 2300, a related picture and information in a process of automated valet parking.

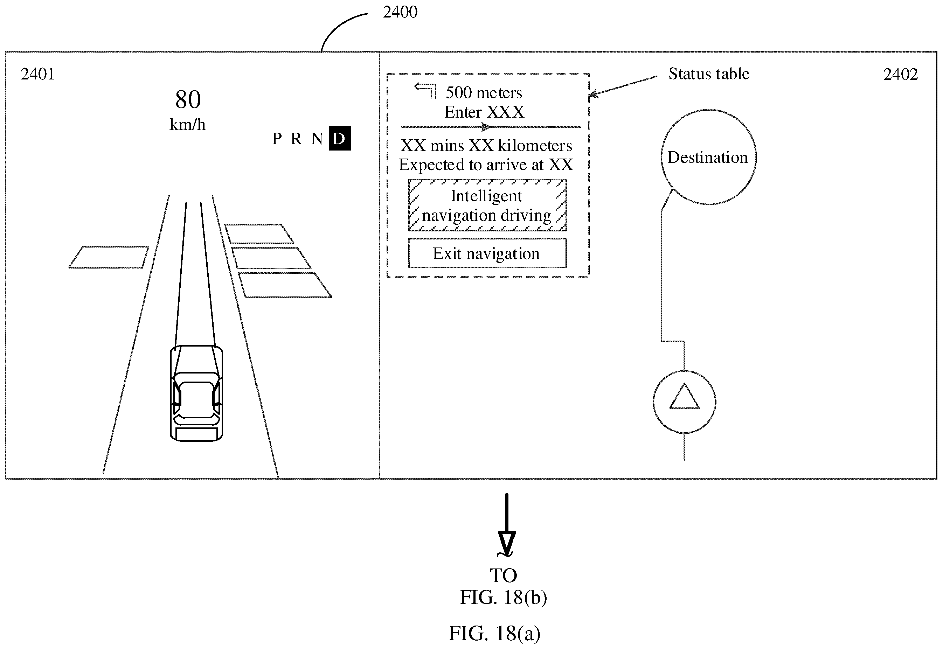

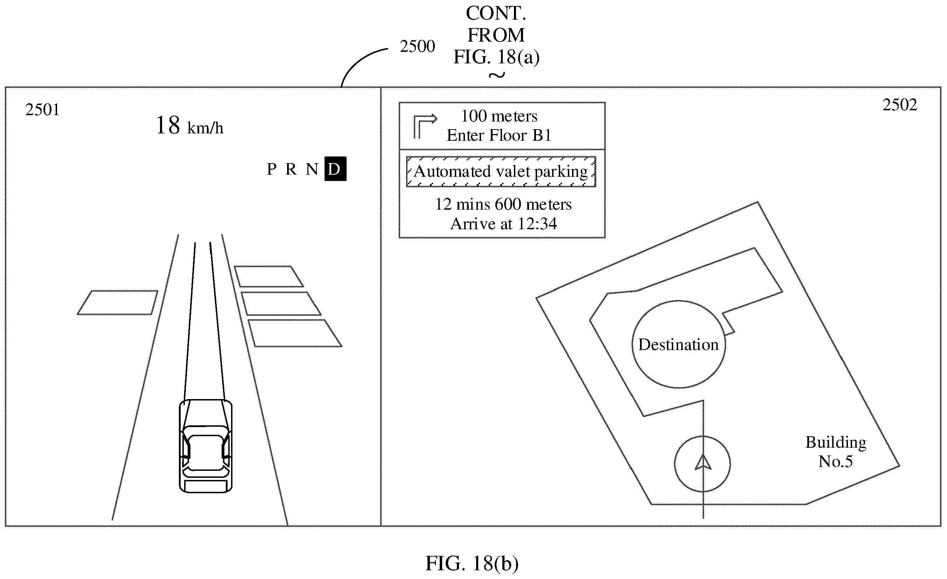

FIG. 18(a) and FIG. 18(b) are a schematic diagram of another interaction interface for automated valet parking according to an embodiment of this application. The ego vehicle may move based on the foregoing navigation route in the autonomous driving mode, and an interaction interface 2400 is displayed in the HMI. As shown in FIG. 18(a), the interaction interface 2400 may include a display area 2401 and a display area 2402. A picture of cruising may be displayed in the display area 2401. A picture of navigation and a status table may be displayed in the display area 2402. An icon "Intelligent navigation driving" in the status table is highlighted to indicate that the ego vehicle is currently in the autonomous driving mode. When detecting that the ego vehicle has entered the target area, the automated valet parking system automatically activates the automated valet parking function, and an interaction interface 2500 is displayed in the HMI. As shown in FIG. 18(b), for content displayed in the interaction interface 2500, refer to the interaction interface 900 in FIG. 9(b). The electronic map of the target area and other information may be displayed in the interaction interface 2500.

Further, the automated valet parking system controls the ego vehicle to perform automated valet parking based on the navigation route. For a process of parking, refer to the foregoing related descriptions. Details are not described herein again.

After the ego vehicle has been parked in a parking space, or when the user selects the target parking space, an operation of favoriting the parking space may be performed.

In a possible implementation, when it is detected that the ego vehicle has been parked in the target parking space, whether the target parking space is the favorited parking space is determined; and if the target parking space is a non-favorited parking space, prompt information about whether to favorite the target parking space is sent to the user. For detailed descriptions of this implementation, refer to the foregoing related descriptions. Details are not described herein again.

In a possible implementation, in response to an operation of the user for selecting the target parking space from the parking space in the target area, whether the target parking space is the favorited parking space is determined; and if the target parking space is a non-favorited parking space, the prompt information about whether to favorite the target parking space is sent to the user. For detailed descriptions of this implementation, refer to the foregoing related descriptions. Details are not described herein again.

For example, in the interaction interface 2100 shown in FIG. 16(b), the information bar may further include a favorites function button. When the user selects the another parking space in the diagram of the parking space to be the navigation destination, the favorites function button may be displayed in the information bar, to prompt the user that the parking space is the non-favorited parking space and may be favorited. Further, the user may tap the function button, to enter an interface for editing the favorited parking space and edit information about the parking space.

In a possible implementation, an editing page is displayed in response to an operation of the user for confirming to favorite the target parking space; and the target parking space is marked as the favorited parking space in response to an operation of the user for editing a parking space type and/or a parking space name, where the parking space type includes any one of default, exclusive, and non-exclusive. For detailed descriptions of this implementation, refer to the foregoing related descriptions. Details are not described herein again.

Further, considering that the target parking space may be occupied by another vehicle, when the target parking space is occupied, different processing strategies may be used based on a type of the target parking space.

In a possible implementation, when it is detected that the target parking space is occupied, a vacant parking space is searched for; and if the vacant parking space is found, the ego vehicle is automatically parked in the vacant parking space and location information of the vacant parking space is sent to the user; and if the vacant parking space is not found, prompt information about taking over the vehicle is sent to the user; or when it is detected that the target parking space is occupied, prompt information about taking over the vehicle is sent to the user. For detailed descriptions of this implementation, refer to the foregoing related descriptions. Details are not described herein again.

In a possible implementation, information about the vacant parking space in the target area is obtained; and an optimal vacant parking space in the vacant parking space is determined when it is detected that the target parking space is occupied, and the ego vehicle is controlled to park in the optimal vacant parking space. For detailed descriptions of this implementation, refer to the foregoing related descriptions. Details are not described herein again.

Based on a same inventive concept as that in the foregoing method embodiments, an embodiment of this application further provides an automated valet parking apparatus. The automated valet parking apparatus is configured to perform the technical solutions described in the foregoing method embodiments. For example, the steps shown in FIG. 3 or FIG. 15 may be performed.

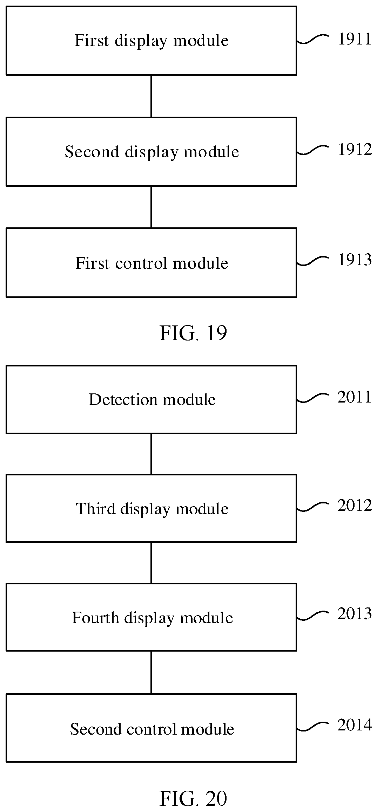

FIG. 19 is a schematic diagram of a structure of an automated valet parking apparatus according to an embodiment of this application. As shown in FIG. 19, the apparatus may include a first display module 1911, configured to display information about a parking space in a target area when it is detected that an ego vehicle has entered the target area; a second display module 1912, configured to display a parking route, where the parking route includes a route from a location of the ego vehicle to a target parking space in the target area; and a first control module 1913, configured to control the ego vehicle to perform automated valet parking based on the parking route.

In a possible implementation, the parking space in the target area includes a favorited parking space and/or a recommended parking space.

In a possible implementation, the second display module 1912 is further configured to: display the parking route in response to an operation of a user for selecting the target parking space from the parking space in the target area.

In a possible implementation, the first display module 1911 is further configured to displaying a list of parking spaces in the target area, where the parking space in the list is sequentially sorted based on a corresponding priority.

In a possible implementation, the first display module 1911 is further configured to display a distribution diagram of the parking space in the target area, where parking spaces corresponding to different priorities are represented by different icons.

In a possible implementation, the favorited parking space includes at least one of a default parking space, an exclusive parking space, or a non-exclusive parking space, where priorities corresponding to the default parking space, the exclusive parking space, and the non-exclusive parking space decrease successively.

In a possible implementation, the apparatus further includes: a prompting module, configured to: determine whether the target parking space is the favorited parking space when it is detected that the ego vehicle has been parked in the target parking space; and if the target parking space is a non-favorited parking space, send prompt information about whether to favorite the target parking space to the user; or determine whether the target parking space is the favorited parking space in response to the operation of the user for selecting the target parking space from the parking space in the target area; and if the target parking space is a non-favorited parking space, send prompt information about whether to favorite the target parking space to the user.

In a possible implementation, the apparatus further includes a favoriting module, configured to: display an editing page in response to an operation of the user for confirming to favorite the target parking space; and mark the target parking space as the favorited parking space in response to an operation of the user for editing a parking space type and/or a parking space name, where the parking space type includes any one of default, exclusive, and non-exclusive.

In a possible implementation, the apparatus further includes a detection module, configured to: obtain location information of the ego vehicle; and detect, based on the location information of the ego vehicle and location information of a boundary of the target area, whether the ego vehicle has entered the target area.

In a possible implementation, the ego vehicle is driven without navigation; or the ego vehicle is driven based on a navigation route, and a destination corresponding to the navigation route is a place that is in the target area and that is other than the parking space in the target area.

In a possible implementation, the first control module 1913 is further configured to: in response to an automated valet parking command sent by the user, control the ego vehicle to perform automated valet parking based on the parking route.

In a possible implementation, the first control module 1913 is further configured to: when it is detected that the target parking space is occupied, search for a vacant parking space; and if the vacant parking space is found, automatically park in the vacant parking space and send location information of the vacant parking space to the user; and if the vacant parking space is not found, send prompt information about taking over the vehicle to the user; or when it is detected that the target parking space is occupied, send prompt information about taking over the vehicle to the user.

In a possible implementation, the first control module 1913 is further configured to: obtain information about the vacant parking space in the target area; and determine an optimal vacant parking space in the vacant parking space when it is detected that the target parking space is occupied, and control the ego vehicle to park in the optimal vacant parking space.

FIG. 20 is a schematic diagram of a structure of another automated valet parking apparatus according to an embodiment of this application. As shown in FIG. 20, the apparatus may include: a detection module 2011, configured to: when it is detected that a navigation destination searched for by a user is in a target area, send prompt information about whether to select a parking space to the user; a third display module 2012, configured to display information about a parking space in the target area in response to an operation of the user for confirming to select a parking space; a fourth display module 2013, configured to display a navigation route in response to an operation of the user for selecting a target parking space from the parking space in the target area, where the navigation route includes a route from a location of an ego vehicle to the target parking space; and a second control module 2014, configured to: when it is detected that the ego vehicle has entered the target area, control the ego vehicle to perform automated valet parking based on the navigation route.

In a possible implementation, the parking space in the target area includes a favorited parking space and/or a recommended parking space.

In a possible implementation, the third display module 2012 is further configured to display a distribution diagram of the parking space in the target area, where parking spaces corresponding to different priorities are represented by different icons.

In a possible implementation, the third display module 2012 is further configured to displaying a list of parking spaces in the target area, where the parking space in the list is sequentially sorted based on a corresponding priority.

In a possible implementation, the favorited parking space includes at least one of a default parking space, an exclusive parking space, or a non-exclusive parking space, where priorities corresponding to the default parking space, the exclusive parking space, and the non-exclusive parking space decrease successively.

In a possible implementation, the apparatus further includes: a prompting module, configured to: determine whether the target parking space is the favorited parking space when it is detected that the ego vehicle has been parked in the target parking space; and if the target parking space is a non-favorited parking space, send prompt information about whether to favorite the target parking space to the user; or determine whether the target parking space is the favorited parking space in response to the operation of the user for selecting the target parking space from the parking space in the target area; and if the target parking space is a non-favorited parking space, send prompt information about whether to favorite the target parking space to the user.

In a possible implementation, the apparatus further includes a favoriting module, configured to: display an editing page in response to an operation of the user for confirming to favorite the target parking space; and mark the target parking space as the favorited parking space in response to an operation of the user for editing a parking space type and/or a parking space name, where the parking space type includes any one of default, exclusive, and non-exclusive.

In a possible implementation, the detection module 2011 is further configured to: obtain location information of the ego vehicle; and detect, based on the location information of the ego vehicle and location information of a boundary of the target area, whether the ego vehicle has entered the target area.

In a possible implementation, the second control module 2014 is further configured to: when it is detected that the target parking space is occupied, search for a vacant parking space; and if the vacant parking space is found, automatically park in the vacant parking space and send location information of the vacant parking space to the user; and if the vacant parking space is not found, send prompt information about taking over the vehicle to the user; or when it is detected that the target parking space is occupied, send prompt information about taking over the vehicle to the user.

In a possible implementation, the second control module 2014 is further configured to: obtain information about the vacant parking space in the target area; and determine an optimal vacant parking space in the vacant parking space when it is detected that the target parking space is occupied, and control the ego vehicle to park in the optimal vacant parking space.

In the foregoing embodiment, for technical effects and detailed descriptions of the automated valet parking apparatus and the possible implementations thereof, refer to the foregoing automated valet parking method. Details are not described herein again.

It should be noted that, it should be understood that division into the modules of the foregoing automated valet parking apparatus is merely logical function division. In actual implementation, all or some of the modules may be integrated into one physical entity, or may be physically separated. All the modules may be implemented in a form of software invoked by a processing element, or may be implemented in a form of hardware. Alternatively, some of the modules may be implemented in a form of software invoked by a processing element, and some of the modules are implemented in a form of hardware.

An embodiment of this application provides an automated valet parking apparatus, including a processor and a memory configured to store instructions that can be executed by the processor. The processor is configured to execute the instructions to implement the foregoing automated valet parking method. For example, a display configured to display a human-machine interaction interface may be further included.

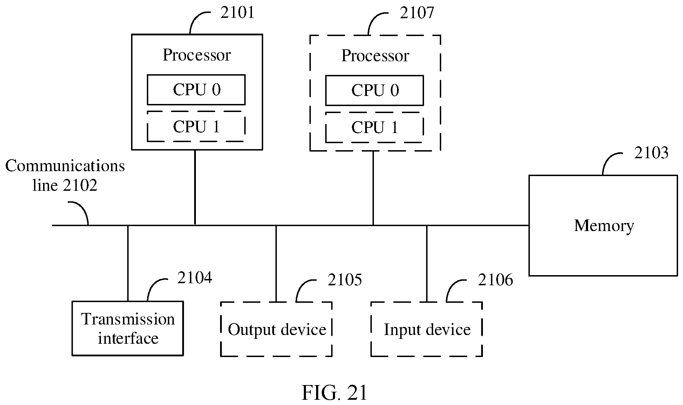

FIG. 21 is a schematic diagram of a structure of another automated valet parking apparatus according to an embodiment of this application. As shown in FIG. 21, the automated valet parking apparatus may include at least one processor 2101, a communications line 2102, a memory 2103, and at least one communications interface 2104.

The processor 2101 may be a general-purpose central processing unit (central processing unit, CPU), a microprocessor, an application-specific integrated circuit (application-specific integrated circuit, ASIC), or one or more integrated circuits for controlling program execution in the solutions of this application.

The communications line 2102 may include a path for transmitting information between the foregoing components.

The communications interface 2104 uses any apparatus, for example, a transceiver, and is configured to communicate with another device or a communications network, for example, the Ethernet, a RAN, or a wireless local area network (wireless local area network, WLAN).

The memory 2103 may be, but is not limited to, a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. The memory may be independent, and is connected to the processor through the communications line 2102. Alternatively, the memory may be integrated with the processor. Usually, the memory provided in this embodiment of this application may be non-volatile. The memory 2103 is configured to store computer-executable instructions for performing the solutions in this application, and the processor 2101 controls the execution. The processor 2101 is configured to execute the computer-executable instructions stored in the memory 2103, to implement the method provided in the foregoing embodiment of this application. For example, the steps shown in FIG. 3 or FIG. 15 may be implemented.

Optionally, the computer-executable instructions in this embodiment of this application may also be referred to as application program code. This is not specifically limited in this embodiment of this application.

For example, the processor 2101 may include one or more CPUs, for example, a CPU 0 and a CPU 1 in FIG. 21.

For example, the automated valet parking apparatus may include a plurality of processors, for example, a processor 2101 and a processor 2107 in FIG. 21. Each of the processors may be a single-core (single-CPU) processor, or may be a multi-core (multi-CPU) processor. The processor herein may be one or more devices, circuits, and/or processing cores for processing data (for example, a computer program instruction).

In a specific implementation, in an embodiment, the automated valet parking apparatus may further include an output device 2105 and an input device 2106. The output device 2105 communicates with the processor 2101, and may display information in a plurality of manners. For example, the output device 2105 may be a liquid crystal display (liquid crystal display, LCD), a light-emitting diode (light-emitting diode, LED) display device, a cathode ray tube (cathode ray tube, CRT) display device, a projector (projector), or the like. When communicating with the processor 2101, the input device 2106 may receive a user input in a plurality of manners. For example, the input device 2106 may be a mouse, a keyboard, a touchscreen device, or a sensing device.

For example, the automated valet parking apparatus may be a vehicle having an automated valet parking function, or another component having an automated valet parking function. The automated valet parking apparatus includes, but is not limited to, another sensor, for example, a vehicle-mounted terminal, a vehicle controller, a vehicle-mounted module, a vehicle-mounted module set, a vehicle-mounted component, a vehicle-mounted chip, a vehicle-mounted unit, or a vehicle-mounted sensor. A vehicle may implement the automated valet parking method provided in the foregoing embodiment of this application by using the vehicle-mounted terminal, the vehicle-mounted controller, the vehicle-mounted module, the vehicle-mounted module set, the vehicle-mounted component, the vehicle-mounted chip, the vehicle-mounted unit, the vehicle-mounted sensor.

For example, the automated valet parking apparatus may alternatively be another intelligent terminal, other than a vehicle, having an automated valet parking function, may be disposed in another intelligent terminal, other than a vehicle, having an automated valet parking function, or may be disposed in a component of the intelligent terminal. The intelligent terminal may be another terminal device, for example, an intelligent transportation device, a smart household device, a robot, or an unmanned aerial vehicle. The intelligent driving apparatus includes, but is not limited to, an intelligent terminal or another sensor, for example, a controller, or a chip in the intelligent terminal, and another component.

For example, the automated valet parking apparatus may be a general-purpose device or a dedicated device. For example, the automated valet parking apparatus may further be a desktop computer, a portable computer, a network server, a cloud server, a personal digital assistant (personal digital assistant, PDA), a mobile phone, a tablet computer, a wireless terminal device, an embedded device, or another device having a processing function.

An embodiment of this application further provides an automated valet parking system. The automated valet parking system includes at least one automated valet parking apparatus mentioned in the foregoing embodiment of this application. For example, the system may include the automated valet parking apparatus shown in FIG. 19 or FIG. 20.

An embodiment of this application further provides a vehicle. The vehicle includes at least one automated valet parking apparatus or the automated valet parking system mentioned in the foregoing embodiments of this application.

An embodiment of this application provides a non-volatile computer-readable storage medium, storing computer program instructions. When the computer program instructions are executed by a processor, the foregoing method is implemented. For example, the method shown in FIG. 3 or FIG. 15 may be implemented.

An embodiment of this application provides a computer program product, including computer-readable code, or a non-volatile computer-readable storage medium carrying computer-readable code. When the computer-readable code is run by a processor of an electronic device, the processor of the electronic device performs the foregoing method. For example, the method shown in FIG. 3 or FIG. 15 may be implemented.

The computer-readable storage medium may be a tangible device that can retain and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage medium include a portable computer disk, a hard disk, a random access memory (Random Access Memory, RAM), a read only memory (Read Only Memory, ROM), an electrically programmable read-only memory (Electrically Programmable Read Only Memory, EPROM, or flash memory), a static random access memory (Static Random Access Memory, SRAM), a portable compact disc read only memory (Compact Disc Read-Only Memory, CD-ROM), a digital video disk (Digital Video Disc, DVD), a memory stick, a floppy disk, a mechanical coding device, for example, a punched card or a protrusion structure in a groove that stores instructions, and any suitable combination thereof.

The computer-readable program instructions or code described herein may be downloaded from the computer-readable storage medium to each computing/processing device, or may be downloaded from a network, for example, the Internet, a local area network, a wide area network, and/or a wireless network to an external computer or an external storage device. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions for performing operations in this application may be assembly instructions, instruction set architecture (Instruction Set Architecture, ISA) instructions, machine instructions, machine-related instructions, microcode, firmware instructions, status setting data, or source code or target code written in any combination of one or more programming languages. The programming language includes an object-oriented programming language, for example, Smalltalk and C++, and a conventional procedural programming language, for example, a "C" language or a similar programming language. The computer-readable program instructions may be completely executed on a user computer, partly executed on a user computer, executed as a stand-alone software package, partly executed on a user computer and partly executed on a remote computer, or completely executed on a remote computer or server. When a remote computer is involved, the remote computer may be connected to a user computer through any type of network, including a local area network (Local Area Network, LAN) or a wide area network (Wide Area Network, WAN), or may be connected to an external computer (for example, connected through the Internet with an Internet service provider). In some embodiments, an electronic circuit, for example, a programmable logic circuit, a field programmable gate array (Field Programmable Gate Array, FPGA), or a programmable logic array (Programmable Logic Array, PLA), is customized based on status information of the computer-readable program instructions. The electronic circuit may execute the computer-readable program instructions, to implement various aspects of this application.

Various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented based on the computer-readable program instructions.

These computer-readable program instructions may be provided for a processor of a general-purpose computer, a dedicated computer, or another programmable data processing apparatus, to produce a machine, so that the instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/actions specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device, to produce a computer-implemented process. Therefore, the instructions executed on the computer, the another programmable data processing apparatus, or the another device implements the functions/actions specified in the one or more blocks in the flowcharts and/or block diagrams.

The flowcharts and block diagrams in the accompanying drawings show system architectures, functions, and operations of possible implementations of the apparatus, the system, the method, and the computer program product according to embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may alternatively occur in a sequence different from that marked in the accompanying drawings. For example, two continuous blocks may actually be executed substantially in parallel, and may sometimes be executed in a reverse order, depending on a function involved.

It should also be noted that each block in the block diagrams and/or flowcharts, and the combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement other variations of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An automated valet parking method, wherein the method comprises:
displaying information about a parking space in a target area when it is detected that an ego vehicle has entered the target area;
displaying a parking route, wherein the parking route comprises a route from a location of the ego vehicle to a target parking space in the target area; and
controlling the ego vehicle to perform automated valet parking based on the parking route.

2. The method according to claim 1, wherein the parking space in the target area comprises a favorited parking space and/or a recommended parking space.

3. The method according to claim 1 or 2, wherein the displaying a parking route comprises: displaying the parking route in response to an operation of a user for selecting the target parking space from the parking space in the target area.

4. The method according to any one of claims 1 to 3, wherein the displaying information about a parking space in a target area comprises: displaying a list of parking spaces in the target area, wherein the parking space in the list is sequentially sorted based on a corresponding priority.

5. The method according to any one of claims 1 to 4, wherein the displaying information about a parking space in a target area comprises: displaying a distribution diagram of the parking space in the target area, wherein parking spaces corresponding to different priorities are represented by different icons.

6. The method according to any one of claims 2 to 5, wherein the favorited parking space comprises at least one of a default parking space, an exclusive parking space, or a non-exclusive parking space, and priorities corresponding to the default parking space, the exclusive parking space, and the non-exclusive parking space decrease successively.

7. The method according to any one of claims 3 to 6, wherein the method further comprises:
determining whether the target parking space is the favorited parking space when it is detected that the ego vehicle has been parked in the target parking space; and
if the target parking space is a non-favorited parking space, sending prompt information about whether to favorite the target parking space to the user; or
determining whether the target parking space is the favorited parking space in response to the operation of the user for selecting the target parking space from the parking space in the target area; and
if the target parking space is a non-favorited parking space, sending prompt information about whether to favorite the target parking space to the user.

8. The method according to claim 7, wherein the method further comprises:
displaying an editing page in response to an operation of the user for confirming to favorite the target parking space; and
marking the target parking space as the favorited parking space in response to an operation of the user for editing a parking space type and/or a parking space name, wherein the parking space type comprises any one of default, exclusive, and non-exclusive.

9. The method according to any one of claims 1 to 8, wherein the method further comprises:
obtaining location information of the ego vehicle; and
detecting, based on the location information of the ego vehicle and location information of a boundary of the target area, whether the ego vehicle has entered the target area.

10. The method according to any one of claims 1 to 9, wherein the ego vehicle is driven without navigation; or the ego vehicle is driven based on a navigation route, and a destination corresponding to the navigation route is a place that is in the target area and that is other than the parking space in the target area.

11. The method according to any one of claims 1 to 10, wherein the controlling the ego vehicle to perform automated valet parking based on the parking route comprises:
in response to an automated valet parking command sent by the user, controlling the ego vehicle to perform automated valet parking based on the parking route.

12. The method according to any one of claims 1 to 11, wherein the method further comprises:
when it is detected that the target parking space is occupied, searching for a vacant parking space; and
if the vacant parking space is found, automatically parking in the vacant parking space and sending location information of the vacant parking space to the user; and if the vacant parking space is not found, sending prompt information about taking over the vehicle to the user; or
when it is detected that the target parking space is occupied, sending prompt information about taking over the vehicle to the user.

13. The method according to any one of claims 1 to 12, wherein the method further comprises:
obtaining information about the vacant parking space in the target area; and
determining an optimal vacant parking space in the vacant parking space when it is detected that the target parking space is occupied, and controlling the ego vehicle to park in the optimal vacant parking space.

14. An automated valet parking method, wherein the method comprises:
when it is detected that a navigation destination searched for by a user is in a target area, sending prompt information about whether to select a parking space to the user;
displaying information about a parking space in the target area in response to an operation of the user for confirming to select a parking space;
displaying a navigation route in response to an operation of the user for selecting a target parking space from the parking space in the target area, wherein the navigation route comprises a route from a location of an ego vehicle to the target parking space; and
when it is detected that the ego vehicle has entered the target area, controlling the ego vehicle to perform automated valet parking based on the navigation route.

15. The method according to claim 14, wherein the parking space in the target area comprises a favorited parking space and/or a recommended parking space.

16. The method according to claim 14 or 15, wherein the displaying information about a parking space in the target area comprises: displaying a distribution diagram of the parking space in the target area, wherein parking spaces corresponding to different priorities are represented by different icons.

17. The method according to any one of claims 14 to 16, wherein the displaying information about a parking space in the target area comprises: displaying a list of parking spaces in the target area, wherein the parking space in the list is sequentially sorted based on a corresponding priority.

18. The method according to any one of claims 15 to 17, wherein the favorited parking space comprises at least one of a default parking space, an exclusive parking space, or a non-exclusive parking space, and priorities corresponding to the default parking space, the exclusive parking space, and the non-exclusive parking space decrease successively.

19. The method according to any one of claims 14 to 18, wherein the method further comprises:
determining whether the target parking space is the favorited parking space when it is detected that the ego vehicle has been parked in the target parking space; and
if the target parking space is a non-favorited parking space, sending prompt information about whether to favorite the target parking space to the user; or
determining whether the target parking space is the favorited parking space in response to the operation of the user for selecting the target parking space from the parking space in the target area; and
if the target parking space is a non-favorited parking space, sending prompt information about whether to favorite the target parking space to the user.

20. The method according to claim 19, wherein the method further comprises:
displaying an editing page in response to an operation of the user for confirming to favorite the target parking space; and
marking the target parking space as the favorited parking space in response to an operation of the user for editing a parking space type and/or a parking space name, wherein the parking space type comprises any one of default, exclusive, and non-exclusive.

21. The method according to any one of claims 14 to 20, wherein the method further comprises:
obtaining location information of the ego vehicle; and
detecting, based on the location information of the ego vehicle and location information of a boundary of the target area, whether the ego vehicle has entered the target area.

22. The method according to any one of claims 14 to 21, wherein the method further comprises:
when it is detected that the target parking space is occupied, searching for a vacant parking space; and
if the vacant parking space is found, automatically parking in the vacant parking space and sending location information of the vacant parking space to the user; and if the vacant parking space is not found, sending prompt information about taking over the vehicle to the user; or
when it is detected that the target parking space is occupied, sending prompt information about taking over the vehicle to the user.

23. The method according to any one of claims 14 to 22, wherein the method further comprises:
obtaining information about the vacant parking space in the target area; and
determining an optimal vacant parking space in the vacant parking space when it is detected that the target parking space is occupied, and controlling the ego vehicle to park in the optimal vacant parking space.

24. An automated valet parking apparatus, wherein the apparatus comprises:
a first display module, configured to display information about a parking space in a target area when it is detected that an ego vehicle has entered the target area;
a second display module, configured to display a parking route, wherein the parking route comprises a route from a location of the ego vehicle to a target parking space in the target area; and
a control module, configured to control the ego vehicle to perform automated valet parking based on the parking route.

25. An automated valet parking apparatus, wherein the apparatus comprises:
a prompting module, configured to: when it is detected that a navigation destination searched for by a user is in a target area, send prompt information about whether to select a parking space to the user;
a first display module, configured to display information about a parking space in the target area in response to an operation of the user for confirming to select a parking space;
a second display module, configured to display a navigation route in response to an operation of the user for selecting a target parking space from the parking space in the target area, wherein the navigation route comprises a route from a location of an ego vehicle to the target parking space; and
a control module, configured to: when it is detected that the ego vehicle has entered the target area, control the ego vehicle to perform automated valet parking based on the navigation route.

26. An automated valet parking apparatus, comprising:
a processor;
a display configured to display a human-machine interaction interface; and
a memory, configured to store executable instructions of the processor, wherein
the processor is configured to execute the instructions to implement the method according to any one of claims 1 to 13 or implement the method according to any one of claims 14 to 23.

27. A non-volatile computer-readable storage medium, storing computer program instructions, wherein when the computer program instructions are executed by a processor, the method according to any one of claims 1 to 13 or the method according to any one of claims 14 to 23 is implemented.

28. A computer program product, wherein when the computer program product runs on a computer, the computer is enabled to perform the method according to any one of claims 1 to 13 or perform the method according to any one of claims 14 to 23.
